(19) Europäisches Patentamt / European Patent Office / Office européen des brevets

(11) **EP 4 517 604 B1**

(12) **EUROPEAN PATENT SPECIFICATION**

(45) Date of publication and mention of the grant of the patent:
**15.07.2026  Bulletin 2026/29**

(21) Application number: **22940108.8**

(22) Date of filing: **26.04.2022**

(51) International Patent Classification (IPC):
**G06N 10/20** $^{(2022.01)}$     **G06N 5/01** $^{(2023.01)}$

(52) Cooperative Patent Classification (CPC):
**G06N 5/01; G06N 10/20**

(86) International application number:
**PCT/JP2022/018970**

(87) International publication number:
**WO 2023/209828 (02.11.2023 Gazette 2023/44)**

(54) **PROGRAM FOR PARTITIONING MULTIPLE-QUBIT OBSERVABLES, METHOD FOR PARTITIONING MULTIPLE-QUBIT OBSERVABLES, AND INFORMATION PROCESSING DEVICE**

PROGRAMM ZUR PARTITIONIERUNG VON MEHRFACH-QUBIT-OBSERVABLES, VERFAHREN ZUR PARTITIONIERUNG VON MEHRFACH-QUBIT-OBSERVABLES UND INFORMATIONSVERARBEITUNGSVORRICHTUNG

PROGRAMME DE PARTITIONNEMENT D'OBSERVABLES À BITS QUANTIQUES MULTIPLES, PROCÉDÉ DE PARTITIONNEMENT D'OBSERVABLES À BITS QUANTIQUES MULTIPLES, ET DISPOSITIF DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**05.03.2025  Bulletin 2025/10**

(73) Proprietor: **FUJITSU LIMITED**
**Kawasaki-shi, Kanagawa 211-8588 (JP)**

(72) Inventor: **KURITA, Tomochika**
**Kawasaki-shi, Kanagawa 211-8588 (JP)**

(74) Representative: **Haseltine Lake Kempner LLP**
**Cheapside House**
**138 Cheapside**
**London EC2V 6BJ (GB)**

(56) References cited:
**JP-A- 2020 144 400     US-A1- 2020 342 343**

• **VLADYSLAV VERTELETSKYI ET AL: "Measurement Optimization in the Variational Quantum Eigensolver Using a Minimum Clique Cover", ARXIV.ORG, CORNELL UNIVERSITY LIBRARY, 201 OLIN LIBRARY CORNELL UNIVERSITY ITHACA, NY 14853, 8 July 2019 (2019-07-08), XP081628315**
• **TOMOCHI KURITA, MIKIO MORITA, HIROTAKA OSHIMA, SHINTARO SATO: "Fast measurement of quantum states using digital annealer", IPSJ SIG TECHNICAL REPORT, JP, vol. 2021-QS-3, no. 15, 24 June 2021 (2021-06-24), JP, pages 1 - 7, XP009547887, ISSN: 2435-6492**

**Description**

TECHNICAL FIELD

The present invention relates to a partitioning program for multi-qubit observables, a partitioning method for the multi-qubit observables, and an information processing device.

BACKGROUND ART

In a quantum computer, electronic information referred to as a qubit is used. The qubit may take a superposition state of "0" and "1". Furthermore, it is also possible to create a quantum entanglement state with a plurality of qubits. The quantum computer may obtain a solution of a complex problem in a short time by calculating all possibilities simultaneously and in parallel using these superposition state and quantum entanglement state.

There is a problem that may be solved much faster by using the quantum computer than using a classical computer. Note that an algorithm for solving a problem in the quantum computer is referred to as a quantum algorithm, and an algorithm for solving a problem in the classical computer is referred to as a classical algorithm. For example, there is a problem in which, in the classical algorithm, calculation of steps (exponential time) of about $M^M$ times is needed to obtain a solution, whereas in the quantum algorithm, calculation of steps (polynomial time) of only about $M^2$ times is needed (M is a natural number indicating a magnitude of the problem). Examples of a problem that may be calculated in a short time by the quantum computer include a Deutsch-Jozsa algorithm, a Shor algorithm, and the like.

In the quantum computer, what may be read from a qubit is a value in a z-axis direction in a Bloch sphere. Moreover, only "0" or "1" may be read from the qubit. For example, when a quantum state $1/\sqrt{2}\ (|0> + |1>)$ is measured, "0" and "1" appear with a probability of 50% each. This is because a superposition state of qubits is destroyed by the measurement to make a classical bit.

In order to completely know the quantum state, it is needed to read not only a value of a z axis of the Bloch sphere but also values of an x axis and a y axis. The value of the x axis or the y axis may be measured by performing an operation of converting the value into the value of the z axis before measurement, and reading the value after the conversion operation. Note that, when qubits are measured, a superposition state of the qubits is destroyed. Therefore, in order to completely know the quantum state, quantum calculation for measurement of each of the x axis, the y axis, and the z axis is repeatedly executed.

A state of one or a plurality of qubits is represented by using a plurality of observables. In order to completely know states of n qubits, it is sufficient that expected values of $4^n-1$ observables are measured (n is a natural number). By obtaining the expected value for each observable, the state of the qubit may be completely known. In a case where the expected value for each observable is obtained, basically, one quantum circuit is created for each observable. In the quantum computer, in order to suppress a statistical error, $10^4$ to $10^5$ times of measurement are performed per observable.

As a technology related to the quantum computer, for example, an optimization device that suppresses an increase in a calculation amount when a combinatorial optimization problem is divided for calculation has been proposed. An optimization device capable of improving calculation efficiency when a combinatorial optimization problem is divided for calculation has also been proposed.

Moreover, a hybrid computing system using cluster contraction for converting large, dense input to reduced input that may be easily mapped into a quantum processor has also been proposed. Furthermore, a technology of accelerating a variational quantum eigensolver (VQE) by receiving a qubit Hamiltonian representing a linear combination of a plurality of Pauli strings has also been proposed.

VLADYSLAV VERTELETSKYI ET AL: "Measurement Optimization in the Variational Quantum Eigensolver Using a Minimum Clique Cover",ARXIV.ORG, CORNELL UNIVERSITY LIBRARY, 201 OLIN LIBRARY CORNELL UNIVERSITY ITHACA, NY 14853, 8 July 2019 (2019-07-08), describes a method for partitioning of the qubit Hamiltonian in the VQE approach to the electronic structure problem. The Hamiltonian is represented as a graph where every vertex corresponds to a single Pauli word and the edges are connecting the terms that are qubit-wise commuting. In this representation, the problem of grouping terms that can be measured simultaneously by single-qubit measurement is equivalent to finding fully connected subgraphs.

CITATION LIST

PATENT DOCUMENT

Patent Document 1: Japanese Laid-open Patent Publication No. 2021-5282

Patent Document 2: Japanese Laid-open Patent Publication No. 2021-131695
Patent Document 3: U.S. Patent Application Publication No. 2020/0234172
Patent Document 4: U.S. Patent Application Publication No. 2020/0272686

## SUMMARY OF INVENTION

### TECHNICAL PROBLEM

In simultaneous measurement of expected values of a plurality of observables, partitioning generates sets (cliques) of observables that may be simultaneously measured. Each observable is included in any one of the cliques. The simultaneous measurement of the expected values by the quantum computer is performed for each of the predetermined number of observables included in the same clique. In this case, the smaller the number of cliques, the more efficient the measurement of the state of the qubit. As the number of observables to be measured increases, a calculation amount for generating a clique including more observables becomes enormous. In that case, for example, by performing the partitioning using an Ising machine that calculates a ground state of an Ising model, it is possible to accelerate the partitioning.

Note that in a case where the number of observables is large and the number of observables exceeds the number of bits available in the Ising machine, the Ising machine may not perform the partitioning for all the observables. Thus, it is conceivable to repeatedly execute the partitioning for a part of the observables to generate the clique. However, only by simply repeatedly executing the partitioning for the part of the observables, the number of observables included in one clique is reduced and the number of cliques to be generated is increased.

In one aspect, an object of the present case is to reduce the number of cliques generated in partitioning.

### SOLUTION TO PROBLEM

The present invention is defined by the independent claims, to which reference should now be made. Specific embodiments are defined in the dependent claims. In one proposal, there is provided a partitioning program according to claim 1.

### ADVANTAGEOUS EFFECTS OF INVENTION

According to one aspect, the number of cliques generated in partitioning may be reduced.

The object described above and other objects, features, and advantages of the present invention will become clear from the following description related to the appended drawings, which represent preferred embodiments as examples of the present invention.

### BRIEF DESCRIPTION OF DRAWINGS

FIG. 1 is a diagram illustrating an example of a partitioning method for multi-qubit observables according to a first embodiment.
FIG. 2 is a diagram illustrating an example of a system configuration.
FIG. 3 is a diagram illustrating an example of hardware of a classical computer.
FIG. 4 is a diagram for describing a method for simultaneously measuring observables.
FIG. 5 is a diagram illustrating a determination example of a commutation relation.
FIG. 6 is a diagram illustrating an example of partitioning.
FIG. 7 is a diagram illustrating an example of the partitioning.
FIG. 8 is a block diagram illustrating an example of functions of the classical computer.
FIG. 9 is a diagram illustrating an example of processing performed by a commutation relation determination unit.
FIG. 10 is a diagram illustrating an example of clique generation processing.
FIG. 11 is a diagram illustrating an example of repeated processing of clique generation.
FIG. 12 is a diagram illustrating an example of measurement of expected values of the observables using a quantum circuit for simultaneous measurement.
FIG. 13 is a diagram illustrating a comparison result of the number of cliques for each partitioning scheme.
FIG. 14 is a diagram illustrating a comparison result of a calculation time for each partitioning scheme.
FIG. 15 is a diagram (part 1) illustrating an example of a partitioning method for performing a plurality of times of the clique generation processing in generation of one clique.

FIG. 16 is a diagram (part 2) illustrating an example of the partitioning method for performing the plurality of times of the clique generation processing in generation of one clique.

FIG. 17 is a diagram (part 3) illustrating an example of the partitioning method for performing the plurality of times of the clique generation processing in generation of one clique.

FIG. 18 is a diagram illustrating an example of a clique generation processing end condition.

FIG. 19 is a diagram (part 4) illustrating an example of the partitioning method for performing the plurality of times of the clique generation processing in generation of one clique.

FIG. 20 is a diagram (part 5) illustrating an example of the partitioning method for performing the plurality of times of the clique generation processing in generation of one clique.

FIG. 21 is a diagram (part 6) illustrating an example of the partitioning method for performing the plurality of times of the clique generation processing in generation of one clique.

FIG. 22 is a flowchart illustrating an example of an observable measurement procedure.

FIG. 23 is a flowchart illustrating an example of a procedure of partitioning processing.

FIG. 24 is a flowchart (1/2) illustrating an example of a procedure of the clique generation processing.

FIG. 25 is a flowchart (2/2) illustrating an example of the procedure of the clique generation processing.

FIG. 26 is a diagram illustrating an effect of reducing the number of cliques according to the number of bits of an Ising machine.

FIG. 27 is a diagram illustrating a first example of a relation between a processing amount and the number of observables in a clique.

FIG. 28 is a diagram illustrating a first example of the number of times of the clique generation processing for each confirmed clique.

FIG. 29 is a diagram illustrating a second example of the relation between the processing amount and the number of observables in the clique.

FIG. 30 is a diagram illustrating a second example of the number of times of the clique generation processing for each confirmed clique.

## DESCRIPTION OF EMBODIMENTS

Hereinafter, the present embodiments will be described with reference to the drawings. Note that each of the embodiments may be implemented in combination with the plurality of embodiments as long as no contradiction arises.

[First Embodiment]

First, a first embodiment will be described. The first embodiment is a partitioning method for multi-qubit observables that alleviates a limit on the number of observables in a case where a clique is generated using an Ising machine (including an annealing-type computer).

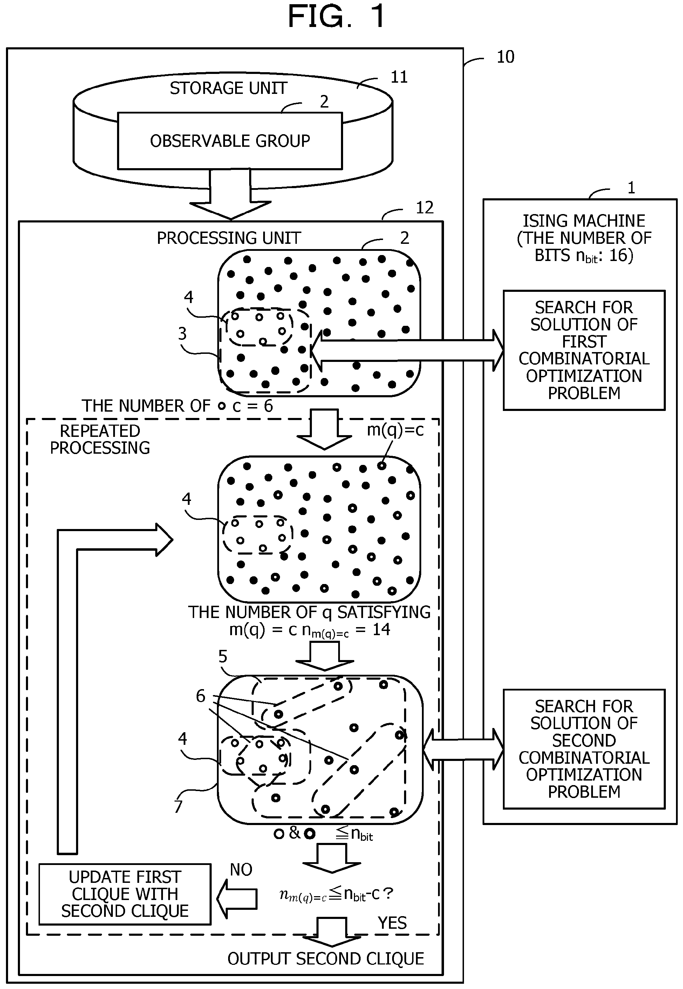

FIG. 1 is a diagram illustrating an example of the partitioning method for the multi-qubit observables according to the first embodiment. In FIG. 1, an example of a case where processing of the partitioning method for the multi-qubit observables is performed by an information processing device 10 is illustrated. The information processing device 10 may perform the partitioning method for the multi-qubit observables by, for example, executing a partitioning program for the multi-qubit observables.

The information processing device 10 includes a storage unit 11 and a processing unit 12. The storage unit 11 is, for example, a memory or a storage device included in the information processing device 10. The processing unit 12 is, for example, a processor or an arithmetic circuit included in the information processing device 10.

The information processing device 10 performs partitioning of a plurality of observables representing a states of a qubit. The information processing device 10 is coupled to an Ising machine 1, and determines observables to be included in a clique using the Ising machine 1 at the time of partitioning.

Note that, when clique generation processing is performed, the Ising machine 1 allocates calculation bits to each of observables to be subjected to the processing. A value of each bit represents whether or not to include a corresponding observable in a clique. Therefore, in order to perform the clique generation processing, the number of observables included in a set of the observables to be subjected to the processing is needed to be equal to or less than the number of bits used for calculation by the Ising machine 1.

The storage unit 11 stores an observable group 2. The observable group 2 includes a plurality of observables to be measured among a plurality of observables representing states of a plurality of qubits. In the example of FIG. 1, circles in the observable group 2 represent the observables to be measured. The observables to be measured are determined according to a problem to be solved using a quantum computer. For example, in a case where it is desired to completely know states of n qubits, $4^n-1$ observables are included in the observable group 2.

The processing unit 12 performs partitioning that divides the observable group 2 into a plurality of cliques. The processing unit 12 generates the cliques one by one. The processing unit 12 executes the clique generation processing of two or more stages in order to generate one clique.

For example, the processing unit 12 generates a first group 3 including at least two observables among the plurality of observables to be measured. The first group 3 includes, for example, observables optionally selected from the observable group 2. For example, the processing unit 12 selects the same number of observables as the number of bits that may be used for calculation by the Ising machine 1 from the observable group 2, and includes the selected observables in the first group 3.

The processing unit 12 causes the Ising machine 1 to calculate a solution of a first combinatorial optimization problem that searches for a combination of observables in the first group 3, which includes more observables satisfying a predetermined condition. The predetermined condition is a condition that expected values may be simultaneously measured for optional two observables included in the combination. Whether or not expected values of two observables A and B may be simultaneously measured may be determined by whether or not the observables are commutative (AB = BA). In the case of commutative, the expected values may be simultaneously measured.

For example, the processing unit 12 generates the first group 3 including the same number of observables as the number of bits used for calculation by the Ising machine 1, and instructs the Ising machine 1 to search for the solution of the first combinatorial optimization problem according to the generated first group 3. Then, the processing unit 12 acquires the solution of the first combinatorial optimization problem from the Ising machine 1. The processing unit 12 generates a first clique 4 indicating a combination of observables indicated in the solution of the first combinatorial optimization problem.

Next, the processing unit 12 generates a second group 5 based on the number of observables in the first clique 4, for which expected values may be simultaneously measured for each observable not included in the first clique 4. The second group 5 includes a predetermined number of observables not included in the first clique 4.

For example, the processing unit 12 counts the number of commutative observables indicating the number of observables in the first clique 4, for which the expected values may be simultaneously measured for each observable not included in the first clique 4. Then, the processing unit 12 generates the second group 5 including a predetermined number of observables in descending order of the number of commutative observables among the observables not included in the first clique 4.

At this time, the processing unit 12 generates the second group 5 so that the number of observables included in a union 7 of the first clique 4 and the second group 5 becomes equal to or less than the number of bits used for calculation by the Ising machine 1. For example, the processing unit 12 generates the second group 5 including the same number of observables as a difference between the number of bits used for calculation by the Ising machine 1 and the number of observables included in the first clique 4.

Next, the processing unit 12 generates the union 7 of the first clique 4 and the second group 5. Then, the processing unit 12 causes the Ising machine 1 to calculate a solution of a second combinatorial optimization problem that searches for a combination of observables in the generated union 7, which includes more observables satisfying a predetermined condition. The predetermined condition is a condition that expected values may be simultaneously measured for optional two observables included in the combination. For example, the processing unit 12 instructs the Ising machine 1 to search for the solution of the second combinatorial optimization problem according to the generated second group 5, and acquires the solution of the second combinatorial optimization problem from the Ising machine 1.

Then, the processing unit 12 generates a second clique 6 indicating a combination of observables indicated in the solution of the second combinatorial optimization problem.

When the second clique 6 is generated, the processing unit 12 determines whether or not a predetermined end condition related to repetition of regeneration processing of the second clique 6 is satisfied. Then, the processing unit 12 repeats the regeneration processing of the second clique 6 until the predetermined end condition is satisfied.

In the regeneration processing of the second clique 6, the processing unit 12 first updates the observables included in the first clique 4 with the observables included in the second clique 6. Next, the processing unit 12 generates the second group 5 based on the first clique 4 after the update of the observables. Moreover, the processing unit 12 causes the Ising machine 1 to calculate the solution of the second combinatorial optimization problem based on the union 7 of the first clique 4 after the update of the observables and the second group 5 generated based on the first clique. Then, the processing unit 12 generates the second clique 6 indicating a combination of observables indicated in the solution of the second combinatorial optimization problem.

The processing unit 12 determines the second clique 6 generated last when the predetermined end condition is satisfied as one clique (confirmed clique) generated by the partitioning on the observable group 2.

Furthermore, the processing unit 12 repeats the determination of the confirmed clique by repetition of the generation processing of the first clique 4 and the second clique 6 described above many times until all the observables are included in any one of the confirmed cliques. For example, after the confirmed clique is determined, the processing unit 12 limits observables to be subjected to the processing in the observable group 2 to remaining observables not included in the second clique 6. Then, using a set of the remaining observables, the processing unit 12 instructs to calculate the solution of the first combinatorial optimization problem, generates the first clique 4, generates the second group 5, instructs to calculate the solution of the second combinatorial optimization problem, and generates the second clique 6. The generation of the second group 5, the calculation instruction of the solution of the second combinatorial optimization problem, and the generation of the second clique 6 are repeated until the predetermined end condition is satisfied. As a result, a second confirmed clique may be generated. The processing unit 12 repeats such second clique generation processing until all the observables are included in any one of the confirmed cliques. As a result, the partitioning of the observable group 2 is completed.

By confirming one clique through the processing of performing generation of the first clique 4 once and performing generation of the second clique 6 one or a plurality of times in this manner, the number of observables to be subjected to the individual clique generation processing may be made equal to or less than the number of bits of the Ising machine 1. When the number of observables is equal to or less than the number of bits of the Ising machine 1, the clique generation processing may be performed at high speed by searching for the solution of the combinatorial optimization problem using the Ising machine 1. In other words, by confirming one clique through the plurality of times of the clique generation processing, the limit on the number of observables that may accelerate partitioning is alleviated.

Moreover, the second group 5 is the set of observables not included in the first clique 4, for which expected values may be simultaneously measured with many observables in the first clique 4. As a result, by generating the second clique 6 with the union 7 of the first clique 4 and the second group 5 as the object to be subjected to the processing, it may be expected that the second clique 6 has a larger number of observables than the first clique 4. As a result, even when the clique generation processing is performed using the Ising machine 1 that performs calculation with the number of bits smaller than the number of observables in the observable group 2, it is possible to generate a larger clique in consideration of the entire observable group 2. As the number of observables included in one clique increases, the number of cliques generated by the partitioning decreases.

Moreover, the second clique 6 is regenerated until the predetermined end condition is satisfied, and when the predetermined end condition is satisfied, the second clique 6 generated last becomes the confirmed clique. As a result, the second clique 6 including more observables may be the confirmed clique to be included in a result of the partitioning, and the number of cliques to be output as the result is reduced.

When the number of cliques decreases, a ratio of observables that may be simultaneously measured with other observables when expected values of the observables are measured using a gate-type quantum computer increases, and measurement efficiency is improved. For example, the processing unit 12 selects a predetermined number of observables from the same clique among the generated cliques. The processing unit 12 generates a quantum circuit that simultaneously measures expected values of the selected observables. Then, the processing unit 12 instructs the gate-type quantum computer to simultaneously measure the expected values of the object observables based on the generated quantum circuit.

Note that the processing unit 12 may generate the second group 5 based on the number of observables in the first clique 4, for which expected values may be simultaneously measured for each observable not included in the first clique 4. For example, the processing unit 12 counts the number of commutative observables indicating the number of observables in the first clique 4, for which the expected values may be simultaneously measured for each observable not included in the first clique 4. Then, the processing unit 12 generates the second group 5 including a predetermined number of observables in descending order of the number of commutative observables among the observables not included in the first clique 4.

The larger the number of commutative observables included in the observables, the higher a possibility that the observables are included in the second clique 6. Therefore, the second clique 6 including more observables may be efficiently generated by preferentially including the observables having a large number of commutative observables in the second group 5.

The predetermined end condition related to the repetition of the generation processing of the second clique 6 may include a condition using the number of commutative observables. For example, the predetermined end condition may include a condition that the number of observables having the number of commutative observables equal to or larger than a predetermined value among the observables not included in the first clique 4 is equal to or less than the number of observables in the second group 5. The number of observables in the second group 5 is, for example, a value obtained by subtracting the number of observables included in the first clique 4 from the number of bits used for calculation by the Ising machine 1.

In a case where such an end condition based on the number of commutative observables is satisfied, all the observables having the number of commutative observables equal to or larger than the predetermined value may be included in the second group 5. In contrast, in a case where the end condition based on the number of commutative observables is not satisfied, a part of the observables having the number of commutative observables equal to or larger than the predetermined value is leaked from the second group 5. The observables having the number of commutative observables equal to or larger than the predetermined value are observables having a high possibility of being included in the second clique 6. In a case where such an observable is leaked from the second group 5, it means that the observable that is not to be considered in the clique generation processing remains although the observable has the high possibility of being included in the second clique 6. In such a case, the generation processing of the second clique 6 is performed over again. In this manner, in a case where there is a high possibility that the second clique 6 including more observables may be generated, the generation processing of the second clique 6 is continued, and the second clique 6 including more observables may be efficiently generated.

Furthermore, the predetermined end condition may also include a condition that the number of times of execution of the processing of generating the second clique 6 has reached a predetermined value. By determining an upper limit of the number of times of execution of the processing of generating the second clique 6, it is possible to suppress the repetition of the processing of generating the second clique 6 indefinitely although an increase in the number of observables included in the second clique 6 may not be expected.

Moreover, the predetermined end condition may include a condition that the number of observables included in the second clique 6 is equal to the number of bits used for calculation by the Ising machine 1. The number of bits used for calculation by the Ising machine 1 is a maximum value of the number of observables that may be included in the second clique 6. Therefore, in a case where the number of observables included in the second clique 6 reaches the maximum value, the repetition of the generation processing of the second clique 6 is ended, so that it is possible to suppress the unnecessary generation processing of the second clique 6 from being performed.

Note that the processing unit 12 may generate an Ising model corresponding to the clique generation processing in order to cause the Ising machine 1 to execute a solution search of a combinatorial optimization problem. Then, the processing unit 12 may obtain the solution of the combinatorial optimization problem by causing the Ising machine 1 to execute a search for a ground state of the Ising model. By using the Ising machine 1 for searching for the ground state of the Ising model, it is possible to execute the partitioning in which the small number of cliques is obtained in a short time.

[Second Embodiment]

Next, a second embodiment will be described. The second embodiment is a computer system that efficiently performs measurement of a complete state of a qubit.

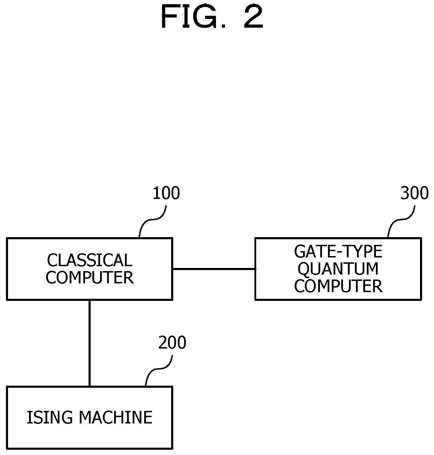

FIG. 2 is a diagram illustrating an example of a system configuration. A classical computer 100 is coupled to an Ising machine 200 and a gate-type quantum computer 300. The classical computer 100 is, for example, a von Neumann computer. The Ising machine 200 is a non-von Neumann computer for calculating a ground state of an Ising model. The Ising machine 200 may be either one using a superconducting quantum circuit or one in which a quantum phenomenon is reproduced by a semiconductor circuit. The gate-type quantum computer 300 is a non-von Neumann computer that may solve a general-purpose problem by operating a quantum gate.

The classical computer 100 controls the Ising machine 200 and the gate-type quantum computer 300 to perform quantum calculation. At that time, the classical computer 100 classifies a plurality of observables of a problem to be calculated into any one of a plurality of cliques. The classification processing into the cliques is referred to as partitioning. For example, the classical computer 100 generates an Ising model for generating a clique from information regarding a set of observables for which simultaneous measurement may be performed, and causes the Ising machine 200 to calculate a ground state of the Ising model. Then, the classical computer 100 controls the gate-type quantum computer 300 to simultaneously measure expected values of two or more observables included in the same clique.

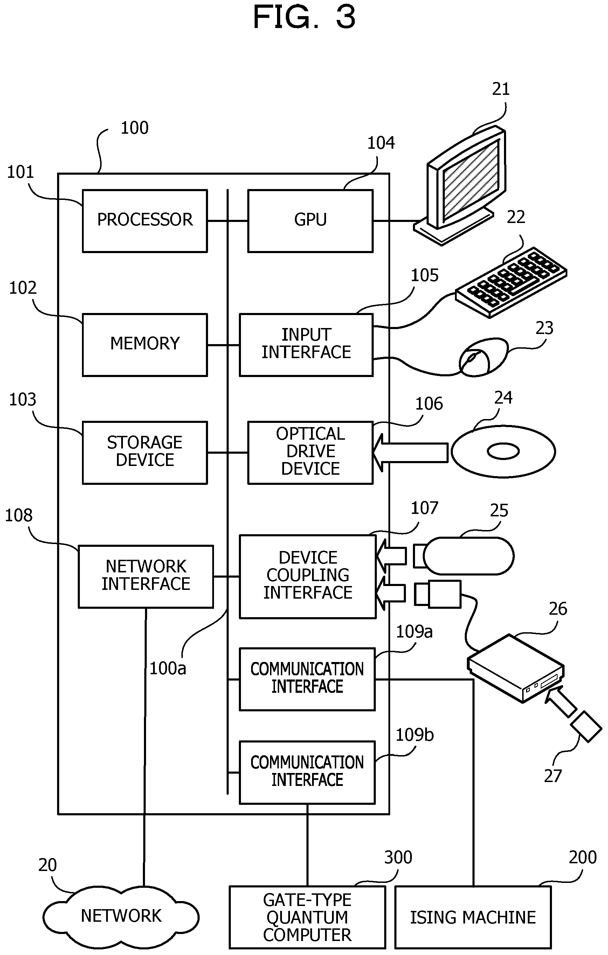

FIG. 3 is a diagram illustrating an example of hardware of the classical computer. The entire device of the classical computer 100 is controlled by a processor 101. A memory 102 and a plurality of peripheral devices are coupled to the processor 101 via a bus 100a. The processor 101 may be a multiprocessor. The processor 101 is, for example, a central processing unit (CPU), a micro processing unit (MPU), or a digital signal processor (DSP). At least a part of functions implemented by the processor 101 executing a program may be implemented by an electronic circuit such as an application specific integrated circuit (ASIC) or a programmable logic device (PLD).

The memory 102 is used as a main storage device of the classical computer 100. In the memory 102, at least a part of an operating system (OS) program and an application program to be executed by the processor 101 is temporarily stored. Furthermore, in the memory 102, various types of data to be used in processing by the processor 101 are stored. As the memory 102, for example, a volatile semiconductor storage device such as a random access memory (RAM) is used.

Examples of the peripheral devices coupled to the bus 100a include a storage device 103, a graphics processing unit (GPU) 104, an input interface 105, an optical drive device 106, a device coupling interface 107, a network interface 108, and communication interfaces 109a and 109b.

The storage device 103 electrically or magnetically writes and reads data to and from a built-in recording medium. The storage device 103 is used as an auxiliary storage device of the computer. In the storage device 103, an OS program, an application program, and various types of data are stored. Note that, as the storage device 103, for example, a hard disk drive (HDD) or a solid state drive (SSD) may be used.

The GPU 104 is an arithmetic device that performs image processing, and is also referred to as a graphic controller. A monitor 21 is coupled to the GPU 104. The GPU 104 causes a screen of the monitor 21 to display an image according to an instruction from the processor 101. Examples of the monitor 21 include a display device using an organic electro luminescence (EL), a liquid crystal display device, and the like.

A keyboard 22 and a mouse 23 are coupled to the input interface 105. The input interface 105 transmits signals sent from the keyboard 22 and the mouse 23 to the processor 101. Note that the mouse 23 is an example of a pointing device, and another pointing device may also be used. Examples of the another pointing device include a touch panel, a tablet, a touch pad, a track ball, and the like.

The optical drive device 106 uses laser light or the like, to read data recorded in an optical disk 24, or write data into the optical disk 24. The optical disk 24 is a portable recording medium in which data is recorded in a readable manner by reflection of light. Examples of the optical disk 24 include a digital versatile disc (DVD), a DVD-RAM, a compact disc read only memory (CD-ROM), a CD-recordable (R)/rewritable (RW), and the like.

The device coupling interface 107 is a communication interface for coupling the peripheral devices to the classical computer 100. For example, a memory device 25 and a memory reader/writer 26 may be coupled to the device coupling interface 107. The memory device 25 is a recording medium equipped with a communication function with the device coupling interface 107. The memory reader/writer 26 is a device that writes data to a memory card 27 or reads data from the memory card 27. The memory card 27 is a card-type recording medium.

The network interface 108 is coupled to a network 20. The network interface 108 is coupled to another computer (including a terminal) (not illustrated) via the network 20.

The communication interface 109a is coupled to the Ising machine 200. The communication interface 109a communicates with the Ising machine 200. For example, the communication interface 109a transmits a search instruction for a ground state of an Ising model to the Ising machine 200. Furthermore, the communication interface 109a acquires a search result from the Ising machine 200.

The communication interface 109b is coupled to the gate-type quantum computer 300. The communication interface 109b communicates with the gate-type quantum computer 300. For example, the communication interface 109b instructs the gate-type quantum computer 300 to measure expected values of observables. Furthermore, the communication interface 109b acquires a measurement result of the expected values from the gate-type quantum computer 300.

The classical computer 100 may implement processing functions of the second embodiment with the hardware as described above. Note that the information processing device 10 indicated in the first embodiment may be implemented with hardware similar to that of the classical computer 100 illustrated in FIG. 3.

The classical computer 100 implements the processing functions of the second embodiment by, for example, executing a program recorded in a computer-readable recording medium. The program in which processing content to be executed by the classical computer 100 is described may be recorded in various recording media. For example, the program to be executed by the classical computer 100 may be stored in the storage device 103. The processor 101 loads at least a part of the program in the storage device 103 into the memory 102, and executes the program. Furthermore, the program to be executed by the classical computer 100 may also be recorded in a portable recording medium such as the optical disk 24, the memory device 25, or the memory card 27. The program stored in the portable recording medium may be executed after being installed in the storage device 103 under control of the processor 101, for example. Furthermore, the processor 101 may also read the program directly from the portable recording medium to execute the program.

Next, a method for simultaneously measuring observables will be specifically described. When qubit superposition, quantum entanglement (entanglement), and further probabilistic mixture are taken into consideration, a quantum state may be represented using a density operator $\rho$. $\rho$ may be represented as a $2^n \times 2^n$ matrix (n is the number of qubits). The density operator $\rho$ may be represented using a plurality of observables (64 in the case of three qubits). Each observable is a linearly independent basis constituting $\rho$ indicating the quantum state. In other words, $\rho$ in the case of three qubits is represented by the following expression.

$$\rho = \lambda_0 I_0 I_1 I_2 + \lambda_1 X_0 I_1 I_2 + \lambda_2 Y_0 I_1 I_2 + \lambda_3 Z_0 I_1 I_2 + \lambda_4 I_0 X_1 I_2 + \lambda_5 X_0 X_1 I_2 + ... + \lambda_{62} y_0 Z_1 Z_2 + \lambda_{63} Z_0 Z_1 Z_2$$

$\lambda_0, ..., \lambda_{63}$ are coefficients of real numbers. X, Y, and Z with subscripts are Pauli operators, and are $2 \times 2$ Pauli matrices ($\sigma_x$, $\sigma_y$, $\sigma_z$). Numerical values of the subscripts are numbers of qubits to be measured. I with a subscript is an identity operator, and is a $2 \times 2$ identity matrix. The identity operator is also a type of the Pauli operator.

The observable is represented by an array of Pauli operators. This array of the Pauli operators is referred to as a Pauli string. The Pauli string indicates a tensor product of the Pauli operators represented by the Pauli string. An expected value of an observable for a k-th term (k is a natural number) is $\lambda_k$. For example, an expected value of $X_0 X_1 I_2$ is $\lambda_5$.

Since $\lambda_0$ is always 1, it is not needed to measure the expected value. As a result, as described above, the number of observables to be measured to completely know states of n qubits is $4^n-1$. For example, in the case of n = 1, a state of a qubit may be completely known by measuring three: {X, Y, Z} observables. In the case of n = 2, the number of observables for which expected values are measured is 15: {$I_0 X_1$, $I_0 Y_1$, $I_0 Z_1$, $X_0 I_1$, $X_0 X_1$, $X_0 Y_1$, $X_0 Z_1$, $Y_0 I_1$, $Y_0 X_1$, $Y_0 Y_1$, $Y_0 Z_1$, ...}.

In measurement of expected values of a large number of observables, a plurality of observables may be simultaneously measured by a gate operation before the measurement.

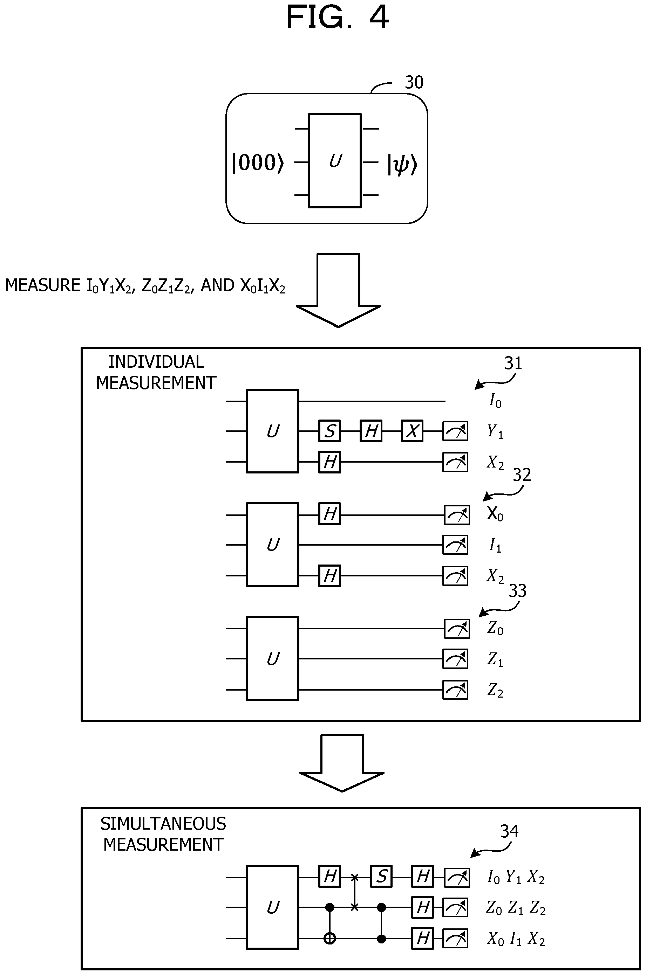

FIG. 4 is a diagram for describing the method for simultaneously measuring observables. In the example of FIG. 4, a case is assumed where a quantum state $|\psi>$ of three qubits is obtained. It is assumed that three observables "$I_0 Y_1 X_2$,

$Z_0Z_1Z_2$, and $X_0I_1X_2$" of a quantum circuit 30 corresponding to a problem to be solved are measured. Horizontal lines of the quantum circuit 30 correspond to the qubits.

In a case where individual measurement is performed, quantum circuits 31 to 33 corresponding to the respective three observables are generated. Rectangular symbols indicated at the horizontal lines of the quantum circuits 31 to 33 are quantum gates to be acted on the respective qubits. The rectangle of "S" indicates an S gate. The rectangle of "X" indicates an X gate. The rectangle of "H" indicates an H gate (Hadamard gate). At a position where a measurement symbol of each qubit is indicated, a state of the corresponding qubit is measured.

For example, in the quantum circuit 31, in order to calculate an expected value of the observable "$I_0Y_1X_2$", expected values of "$I_0$", "$Y_1$", and "$X_2$" are measured using three qubits. "$I_0$" corresponding to a 0th qubit is an identity operator, and measurement of the expected value is unnecessary. For a first qubit, the S gate, the H gate, and the X gate are operated. As a result, the expected value of $Y_1$ may be measured from the first qubit. For a second qubit, the H gate is operated. As a result, the expected value of $X_2$ may be measured from the second qubit. Based on these measurement results, the expected value of the observable "$I_0Y_1X_2$" may be obtained.

In the quantum circuit 32, in order to calculate an expected value of the observable "$X_0I_1X_2$", expected values of "$X_0$", "$I_1$", and "$X_2$" are measured using three qubits. "$I_1$" corresponding to a first qubit is an identity operator, and measurement thereof is unnecessary. For a 0th qubit, the H gate is operated. As a result, the expected value of $X_0$ may be measured from the 0th qubit. For a second qubit, the H gate is operated. As a result, the expected value of $X_2$ may be measured from the second qubit. Based on these measurement results, the expected value of the observable "$X_0I_1X_2$" may be obtained.

In the quantum circuit 33, in order to calculate an expected value of the observable "$Z_0Z_1Z_2$", expected values of "$Z_0$", "$Z_1$", and "$Z_2$" are measured using three qubits. In the quantum circuit 33, an operation by a quantum gate on a side of output of the original quantum circuit 30 is not performed, and the expected values of "$Z_0$", "$Z_1$", and "$Z_2$" may be measured by measuring the respective 0th to second qubits. Based on these measurement results, the expected value of the observable "$Z_0Z_1Z_2$" may be obtained.

In each of the quantum circuits 31 to 33, the expected value of one observable is obtained based on the measurement results of the three qubits. Therefore, in order to obtain the expected values of the three observables, the states of the respective qubits are measured by the three quantum circuits 31 to 33.

In a quantum circuit 34 for simultaneous measurement, on the side of the output of the quantum circuit 30, first, the H gate is provided for a 0th qubit, and a CNOT gate having a first qubit as a control bit and a second qubit as a target bit is provided. Next, a SWAP gate of the 0th qubit and the first qubit is provided. Next, the S gate is provided for the 0th qubit, and a CZ gate having the first qubit as the control bit and the second qubit as the target bit is provided. Finally, the H gate is provided for each qubit.

When the 0th qubit of the quantum circuit 34 is measured, the expected value of the observable "$I_0Y_1X_2$" is obtained. When the first qubit of the quantum circuit 34 is measured, the expected value of the observable "$Z_0Z_1Z_2$" is obtained. When the second qubit of the quantum circuit 34 is measured, the expected value of the observable "$X_0I_1X_2$" is obtained.

In the quantum circuit 34, the expected value of one observable may be measured from one qubit, and the expected values of the three observables may be simultaneously measured. In this manner, the three observables individually measured using the quantum circuits 31 to 33 may be simultaneously measured by the one quantum circuit 34.

There is a condition for observables that may be simultaneously measured. In other words, in observables A and B, in the case of "AB = BA" (commutative), the two observables A and B may be simultaneously measured. For example, in a case where it is determined whether two observables are commutative, a determination of commutative or anticommutative (commutation relation) is made between operators corresponding to the same qubit.

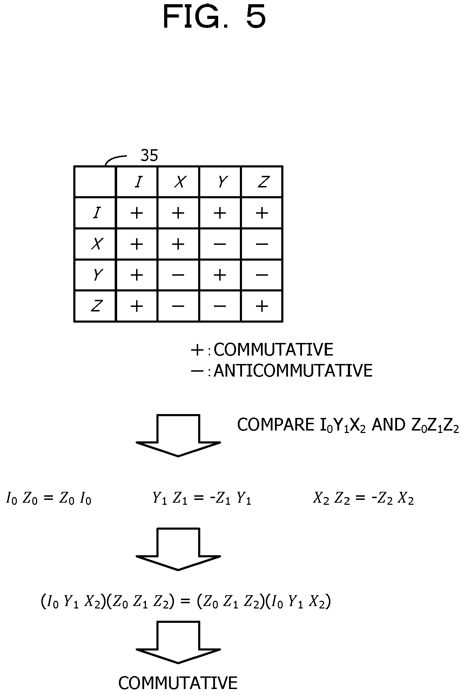

FIG. 5 is a diagram illustrating a determination example of the commutation relation. In a commutative/anticommutative correspondence table 35, whether each combination of operators is commutative or anticommutative is indicated. A symbol indicating whether an operator indicated in a row and an operator indicated in a column are commutative or anticommutative is indicated at a position where the row and the column intersect. A symbol "+" indicates that operators are commutative, and a symbol "-" indicates that operators are anticommutative. In the case of commutative, values do not change even when multiplication order is switched, but in the case of anticommutative, signs are reversed when the multiplication order is switched.

For example, in the case of $I_0Y_1X_2$ and $Z_0Z_1Z_2$, a determination of commutative or anticommutative is made for each of sets of $I_0$ and $Z_0$, $Y_1$ and $Z_1$, and $X_2$ and $Z_2$. In this case, "$I_0 = Z_0$" (commutative), "$Y_1 = -Z_1$" (anticommutative), and "$X_2 = -Z_2$" (anticommutative). When the number of sets of anticommutative is an even number (including 0), the whole becomes commutative "$(I_0Y_1X_2)(Z_0Z_1Z_2) = (Z_0Z_1Z_2)(I_0Y_1X_2)$".

In partitioning of observables, cliques are generated such that observables are commutative in all combinations between observables belonging to the same clique.

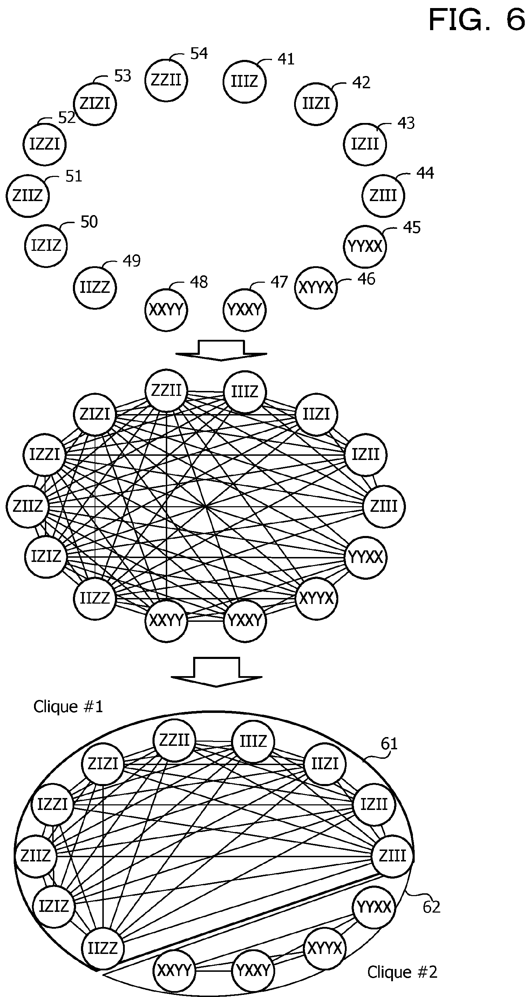

FIG. 6 is a diagram illustrating an example of the partitioning. For example, for 14 observables 41 to 54, commutation relations with other observables are determined. In the example of FIG. 6, a set of observables having a commutative commutation relation is coupled by a line. Then, cliques 61 and 62 are generated based on the commutation relations among the observables. The commutation relation becomes commutative in all combinations of observables belonging to the clique 61. Similarly, the commutation relation becomes commutative in all combinations of observables belonging to the clique 62.

In the example of FIG. 6, the two cliques 61 and 62 are generated, but the number of cliques to be generated changes depending on a partitioning algorithm.

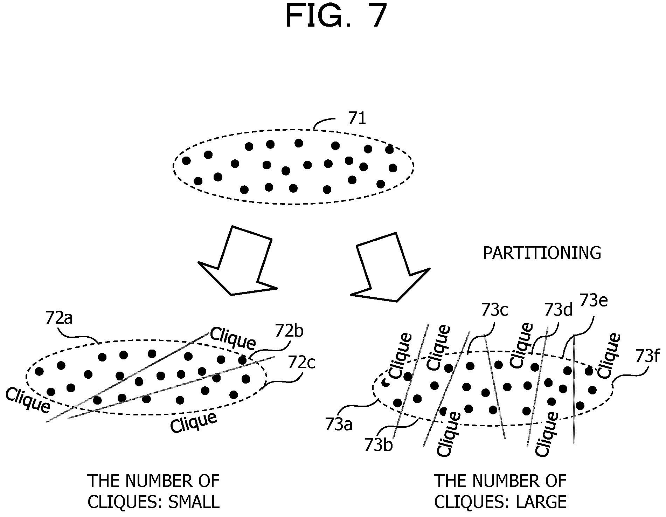

FIG. 7 is a diagram illustrating an example of the partitioning. When each clique of an observable group 71 is classified into any one of a plurality of cliques, there is a plurality of ways of dividing the clique. For example, it is possible to divide into three cliques 72a to 72c. Furthermore, it is also possible to divide into six cliques 73a to 73f.

The smaller the number of cliques, the more efficiently observables may be measured. In other words, when the number of cliques is small, the number of observables belonging to one clique increases. As the number of observables belonging to one clique increases, it becomes easier to create a combination of observables for simultaneous measurement, and processing for measuring all the observables becomes more efficient.

Thus, in the second embodiment, in the classical computer 100, partitioning of an observable group is performed so that the number of cliques becomes smaller. At this time, the classical computer 100 implements the partitioning in a short time by using the Ising machine 200.

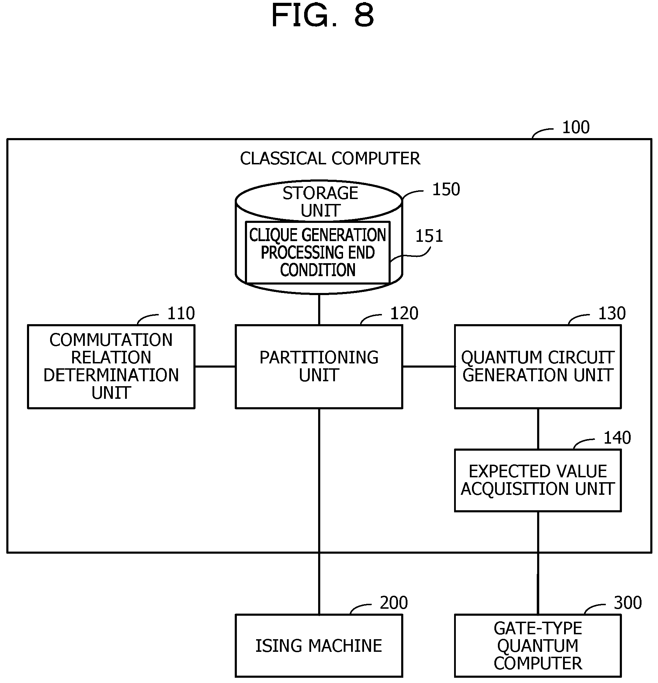

FIG. 8 is a block diagram illustrating an example of functions of the classical computer. The classical computer 100 includes a commutation relation determination unit 110, a partitioning unit 120, a quantum circuit generation unit 130, an expected value acquisition unit 140, and a storage unit 150.

The commutation relation determination unit 110 determines a commutation relation for all combinations of observables to be measured.

The partitioning unit 120 performs partitioning on an observable group based on the commutation relations among the observables. The partitioning unit 120 performs the partitioning using, for example, the Ising machine 200. In a case where the Ising machine 200 is used, the partitioning unit 120 creates an Ising model in which energy decreases as the number of observables included in a clique increases. Then, the partitioning unit 120 instructs the Ising machine 200 to search for a ground state of the created Ising model. Then, information regarding the observables belonging to the clique is responded from the Ising machine 200.

The quantum circuit generation unit 130 generates a quantum circuit for measuring observables. For example, the quantum circuit generation unit 130 selects a predetermined number of observables for simultaneous measurement from the same clique, and generates a quantum circuit corresponding to a combination of the selected observables.

The expected value acquisition unit 140 controls the gate-type quantum computer 300 to measure the observables using the generated quantum circuit.

The storage unit 150 stores a clique generation processing end condition 151 indicating an end condition of repeated processing for generating one clique. A clique that has been generated when the clique generation processing end condition 151 is satisfied is confirmed as a clique to be output as a result of the partitioning.

Note that the function of each element of the classical computer 100 illustrated in FIG. 8 may be implemented by, for example, causing the computer to execute a program module corresponding to the element.

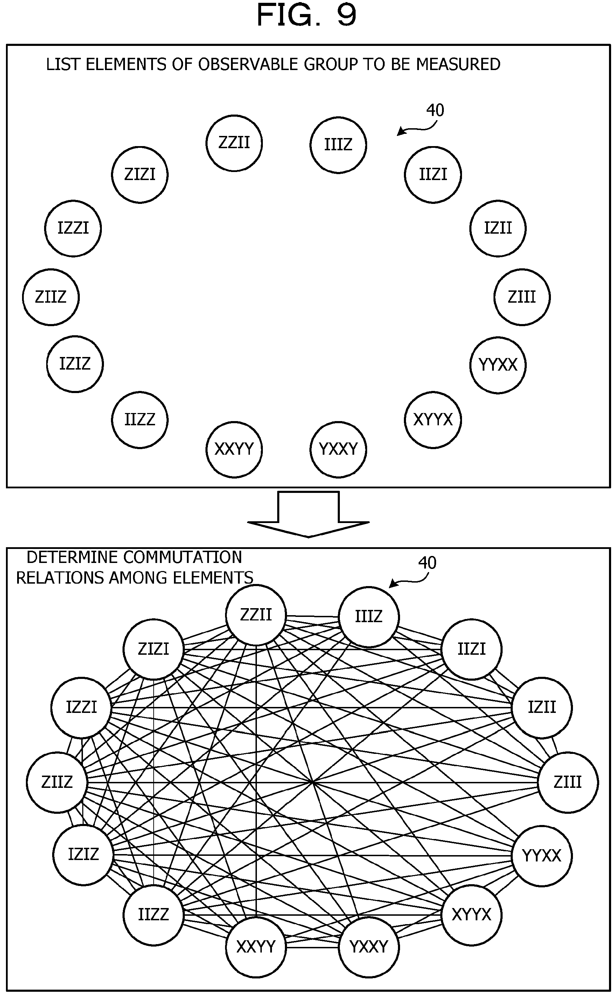

Next, a procedure for measuring expected values of observables will be described with reference to FIGs. 9 to 12.

FIG. 9 is a diagram illustrating an example of processing performed by the commutation relation determination unit. The commutation relation determination unit 110 lists observables that are elements of an observable group 40 to be measured. The observable is represented by a Pauli string (tensor product of Pauli operators). The commutation relation determination unit 110 determines a commutation relation for all pairs obtained by selecting two observables from the observable groups 40. The commutation relation determination unit 110 stores information associating a pair of observables determined to be commutative. In the example of FIG. 9, the pair of observables determined to be commutative is coupled by a line. The commutation relation between observables not coupled by the line is anticommutative.

When the determination of the commutation relation by the commutation relation determination unit 110 is ended, partitioning by the partitioning unit 120 is performed. The partitioning unit 120 repeats, for example, generation processing of a clique including as many observables as possible.

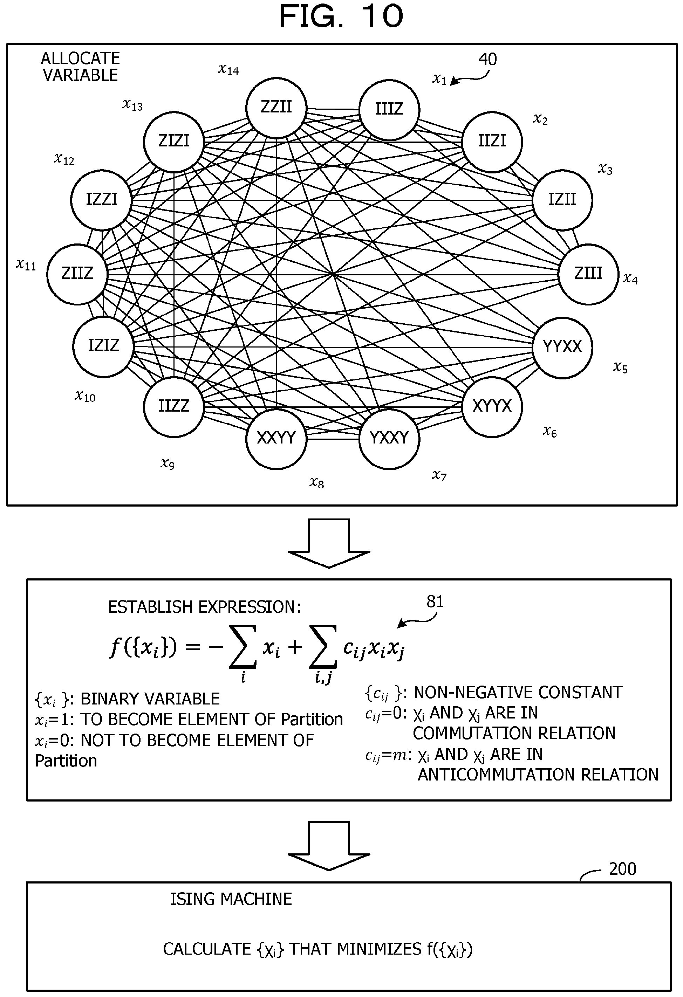

FIG. 10 is a diagram illustrating an example of the clique generation processing. The partitioning unit 120 allocates a variable $\{\chi_i\} = \{\chi_1, ..., \chi_{14}\}$ to each of the 14 observables in the observable group 40. $\{\chi_i\}$ is a binary variable. "$\chi_i = 1$" indicates to become an element of a clique. "$\chi_i = 0$" indicates not to become an element of a clique.

The partitioning unit 120 generates an Ising model 81 using $\{\chi_i\}$. The Ising model 81 is represented by the following expression.

[Expression 1]

$$f(\{x_i\}) = -\sum_i x_i + \sum_{i,j} c_{ij} x_i x_j \qquad (1)$$

In Expression (1), $f(\{\chi_i\})$ corresponds to a Hamiltonian. A value of a first term on a right side decreases as the number of i satisfying $\chi_i = 1$ increases. In a second term on the right side, $\{c_{ij}\}$ is a non-negative constant representing a commutation relation. In a case where an i-th observable and a j-th observable are in a commutation relation, $c_{ij} = 0$ is satisfied. In a case where the i-th observable and the j-th observable are in an anticommutation relation, $c_{ij} = m$ (m is a positive real number) is satisfied.

When a value of m is too small, a possibility that a clique includes a pair of observables in an anticommutation relation increases. A lower limit of m changes depending on the number of object observables. For example, in a case where the number of observables is about 10, the lower limit of m is about "0.25". When the number of observables is about "5000", m may be lowered to about "0.05". When the value of m is increased, a solution is quickly converged in a solution search, but when m is excessively increased, there is a possibility that it becomes not possible to escape from a local solution in the solution search of the Ising model 81. Therefore, in a case where priority is given to calculation accuracy, it is appropriate to set the value of m to a value close to a lower limit value.

As a result, the second term on the right side has a higher value as the number of pairs of observables in an anticommutation relation included in an element of a clique increases. When $f(\{\chi_i\})$ takes a minimum value in Expression (1) of the Ising model 81, the second term on the right side is needed to be 0.

The partitioning unit 120 causes the Ising machine 200 to calculate $\{\chi_i\}$ that minimizes $f(\{\chi_i\})$. Expression (1) is a combinatorial optimization problem that obtains a combination of values of $\{\chi_i\}$ that minimizes $f(\{\chi_i\})$, and may be calculated at high speed by using the Ising machine 200.

Note that, in a case where an anticommutation relation is included in a combination of $\chi_i = 1$ obtained as a solution of the Ising model 81, the partitioning unit 120 may increase the value of m and cause the Ising machine 200 to perform recalculation.

After creating one clique from an observable group $A_0$, the partitioning unit 120 sets a subgroup constituting the created clique as $B_0$. The partitioning unit 120 creates another one clique from an observable group $A_1 = A_0 ¥ B_0$ (¥ indicates a difference set) obtained by removing elements of $B_0$ from $A_0$, and sets a subgroup constituting the generated clique as $B_1$. The partitioning unit 120 creates another one clique from an observable group $A_2 = A_1 ¥ B_1$ obtained by removing elements of $B_1$ from $A_1$, and sets a subgroup constituting the clique as $B_2$. In this manner, the partitioning unit 120 repeatedly executes the clique creation processing on a subgroup having observables included in none of cliques as elements. The partitioning unit 120 ends the partitioning when an observable group $A_{n+1} = A_n ¥ B_n$ obtained by removing elements of $B_n$ from $A_n$ becomes a zero set.

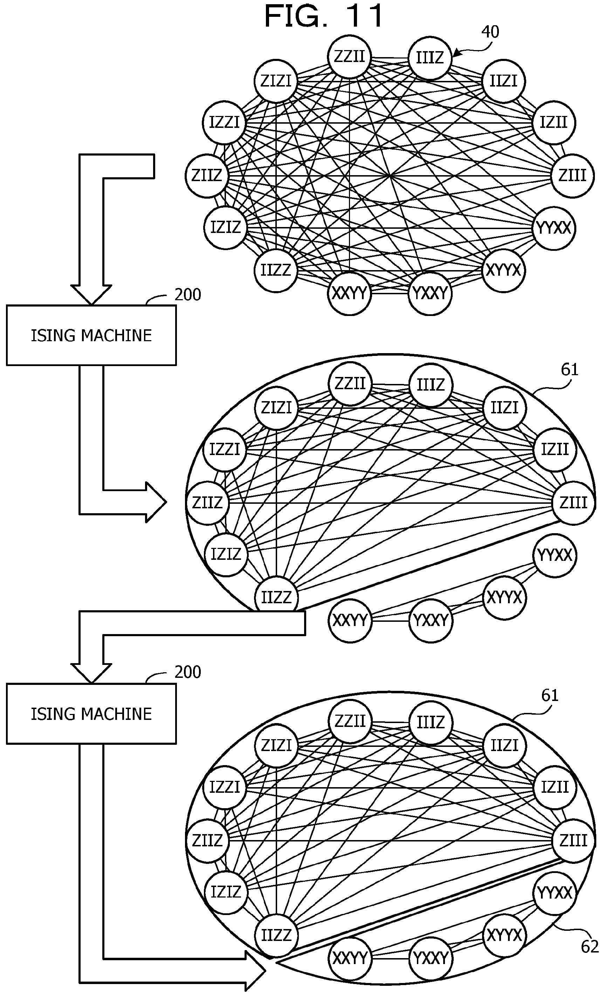

FIG. 11 is a diagram illustrating an example of repeated processing of the clique generation. First, all the observables of the observable group 40 are used as elements, and the Ising machine 200 is caused to generate the clique 61 having the maximum number of elements based on the Ising model 81. From the Ising machine 200, for example, $\{\chi_1, ..., \chi_{14}\}$ for minimizing $f(\{x_i\})$ of the Ising model 81 is responded. An observable corresponding to an element having a value of 1 in the responded $\{\chi_1, ..., \chi_{14}\}$ is an observable included in the clique 61.

The partitioning unit 120 instructs the Ising machine 200 to generate a clique based on a subgroup having observables not included in the clique 61 as elements. The Ising machine 200 generates the clique 62 having the maximum number of elements according to the instruction from the partitioning unit 120.

In the example of FIG. 11, since all the observables are included in either of the two cliques 61 and 62, the partitioning ends after the generation of the clique 62.

When the partitioning is ended, the quantum circuit generation unit 130 generates a quantum circuit for measuring a complete state of a qubit. Then, the expected value acquisition unit 140 controls the gate-type quantum computer 300 to acquire expected values of the observables based on the generated quantum circuit.

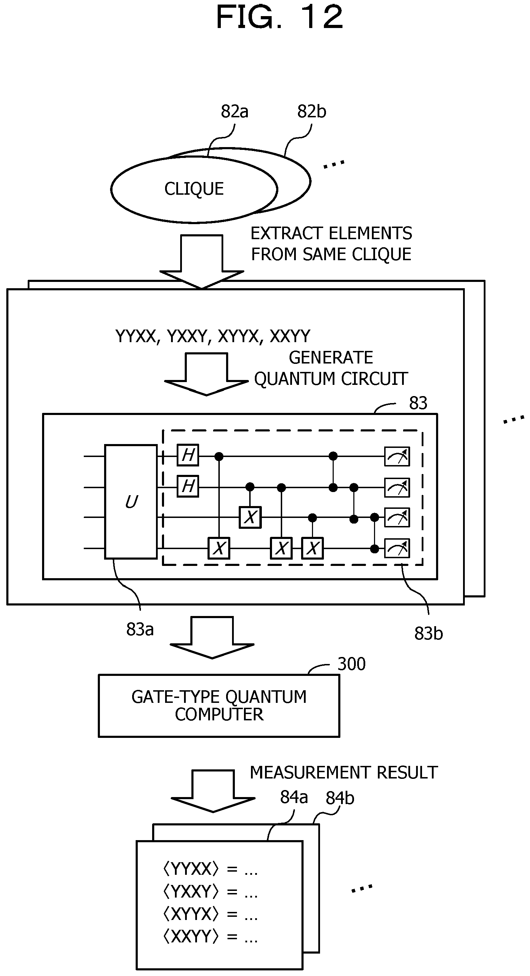

FIG. 12 is a diagram illustrating an example of measurement of expected values of observables using a quantum circuit for simultaneous measurement. The quantum circuit generation unit 130 extracts elements corresponding to observables for simultaneous measurement from one clique of a plurality of cliques 82a, 82b, .... In the example of FIG. 12, the gate-type quantum computer 300 may perform simultaneous measurement with four qubits. In this case, the quantum circuit generation unit 130 extracts a set of four elements from each clique. Then, the quantum circuit generation unit 130 generates a quantum circuit for each combination of the extracted elements. For example, in a case where "YYXX, YXXY, XYYX, XXYY" is extracted, a quantum circuit 83 is generated.

The generated quantum circuit 83 has a configuration in which a measurement quantum circuit 83b that performs an operation for simultaneous measurement of a plurality of observables is added to a side of output of a partial quantum circuit (unitary gate) 83a that performs an operation according to a problem to be solved. The measurement quantum circuit 83b is registered in advance in the quantum circuit generation unit 130 in association with, for example, a combination of observables to be measured. In other words, the quantum circuit generation unit 130 stores, in association with a combination pattern of observables, a quantum circuit for simultaneously measuring expected values of the observables indicated in the combination pattern. Then, the quantum circuit generation unit 130 extracts, from a quantum circuit group registered in advance, a quantum circuit corresponding to the combination of the observables indicated by the elements extracted from the clique. The quantum circuit generation unit 130 couples the measurement quantum circuit 83b corresponding to the combination of the observables to the side of output of the partial quantum circuit 83a corresponding to the problem to be solved, and generates the quantum circuit 83 to be input to the gate-type quantum computer 300.

The expected value acquisition unit 140 transmits the quantum circuit generated for each combination of the observables to the gate-type quantum computer 300. The gate-type quantum computer 300 measures expected values of the observables according to the received quantum circuit. For example, the gate-type quantum computer 300 repeats measurement of states of the respective qubits using the received quantum circuit a plurality of times. Then, the gate-type quantum computer 300 calculates the expected values of the corresponding observables based on measurement results of the plurality of times of measurement of the states of the respective qubits.

The gate-type quantum computer 300 transmits input measurement results 84a, 84b, ... for the respective quantum circuits to the classical computer 100. The measurement results 84a, 84b, ... indicate the expected values of the states of the respective qubits of the corresponding quantum circuit (expected values of the observables corresponding to the corresponding qubits). The expected value acquisition unit 140 uses the expected values of the qubits indicated in the measurement results 84a, 84b, ... as expected values of the observables corresponding to the corresponding qubits of the quantum circuit used for calculation. By obtaining the expected values of all the observables, the density operator $\rho$ indicating complete states (states of an X axis, a Y axis, and a Z axis) of the output of the partial quantum circuit 83a corresponding to the problem to be solved is obtained. Then, the expected value acquisition unit 140 outputs a solution of the problem to be solved obtained based on the density operator $\rho$ as a calculation result.

In this manner, a clique including as many observables as possible is repeatedly generated based on observables included in none of cliques. As a result, the number of cliques to be generated may be reduced. Moreover, the clique may be created at high speed using the Ising machine 200.

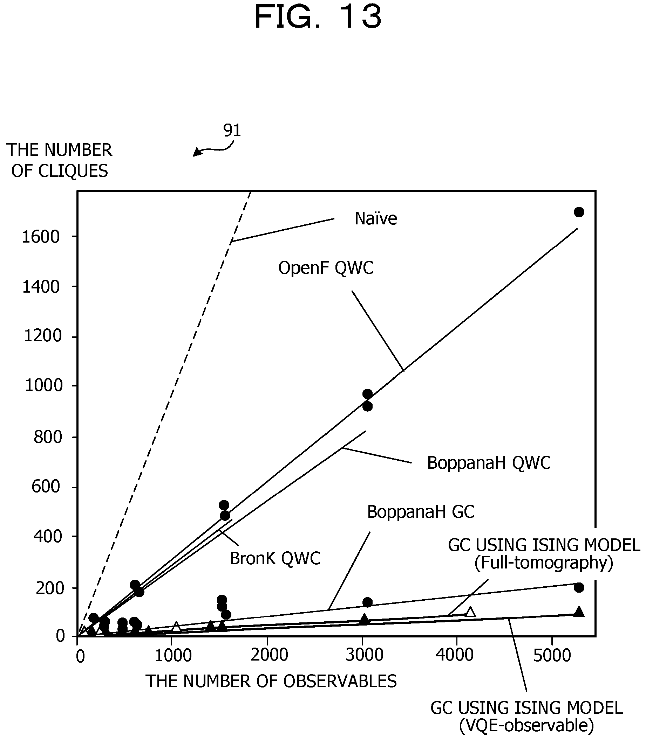

FIG. 13 is a diagram illustrating a comparison result of the number of cliques for each partitioning scheme. A graph 91 of FIG. 13 represents a relation between the number of observables and the number of cliques for each partitioning scheme. In the graph 91, a horizontal axis represents the number of observables, and a vertical axis represents the number of cliques.

"BronK QWC", "BoppanaH QWC", "BoppanaH GC", and "OpenF QWC" are calculation schemes that perform partitioning without using an Ising model. "BronK" and "BoppanaH" are abbreviations for a Bron-Kerbosch algorithm and a Boppana-Halldorsson algorithm, respectively. "OpenF" is an abbreviation for a scheme using Open Fermion which is a package of PYTHON (registered trademark). Qubit-wise commutation (QWC) has a condition that all are commutative in comparison of sets of elements (for example, $I_0 Z_0$, $Y_1 Z_1$, and $X_2 Z_2$ in FIG. 5) so that observables are commutative. In general commutation (GC), as illustrated in FIG. 5, when the number of sets of anticommutative elements is an even number, observables are commutative. Note that "Naïve" (i is with a dieresis) is a line representing the number of cliques in a case where one observable is one clique (case where the number of cliques is maximum).

"GC using Ising model (Full-tomography)" and "GC using Ising model (VQE-observable)" are partitioning schemes by the partitioning unit 120 indicated in the second embodiment. "Full-tomography" in "GC using Ising model" is an example of a case where measurement of all observables for completely knowing a quantum state is performed. "VQE-observable" is an example of a case where partitioning is performed on observables used for calculation of a variational quantum eigensolver (VQE).

As illustrated in FIG. 13, in the methods not using the Ising model, "BoppanaH GC" may reduce the number of cliques to the minimum. On the other hand, in a case where the Ising model is used, the number of cliques may be about half the number of cliques of "BoppanaH GC" when compared with the same number of observables.

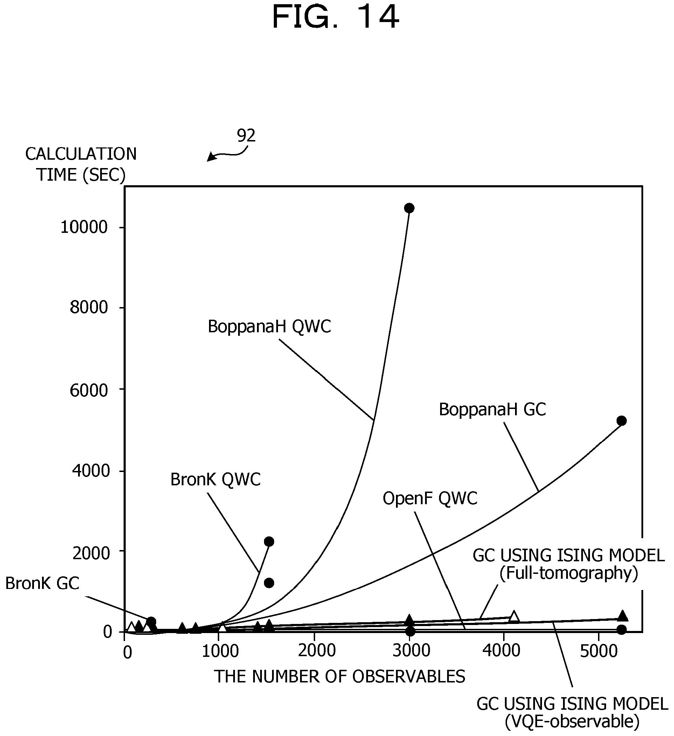

FIG. 14 is a diagram illustrating a comparison result of a calculation time for each partitioning scheme. A graph 92 of FIG. 14 represents a relation between the number of observables and the calculation time for each partitioning scheme. In the graph 92, a horizontal axis represents the number of observables, and a vertical axis represents the calculation time needed for partitioning.

Referring to FIG. 14, in "BoppanaH GC", it takes about 5000 seconds for partitioning in a case where the number of observables is about 5000. In other words, in "BoppanaH GC", it takes a time of 5000 seconds for division into about 200 cliques. On the other hand, in partitioning using the Ising model, the calculation time is greatly shortened (1/10 or less) by searching for a ground state of the Ising model using the Ising machine 200.

In this manner, by performing partitioning using the Ising model, it is possible to perform the partitioning into the small number of cliques and to shorten the calculation time. Note that the above description is based on a premise that the number of observables in an observable group at the time of generating one clique from the observable group is equal to or less than the number of bits that may be used in the Ising machine 200. In a case where the number of observables in the observable group exceeds the number of bits that may be used in the Ising machine 200, it is difficult for the Ising machine 200 to perform a solution search of the Ising model for all the observables. In other words, in the Ising machine 200, since one observable corresponds to one bit, an upper limit of the number of observables that may be handled in one time of the clique generation processing is the number of bits that may be used in the Ising machine 200.

Thus, in the classical computer 100, in the case of an observable group having a scale equal to or larger than the number of bits of the Ising machine 200, the Ising machine 200 is controlled to execute the clique generation processing from a subgroup a plurality of times, thereby generating one clique.

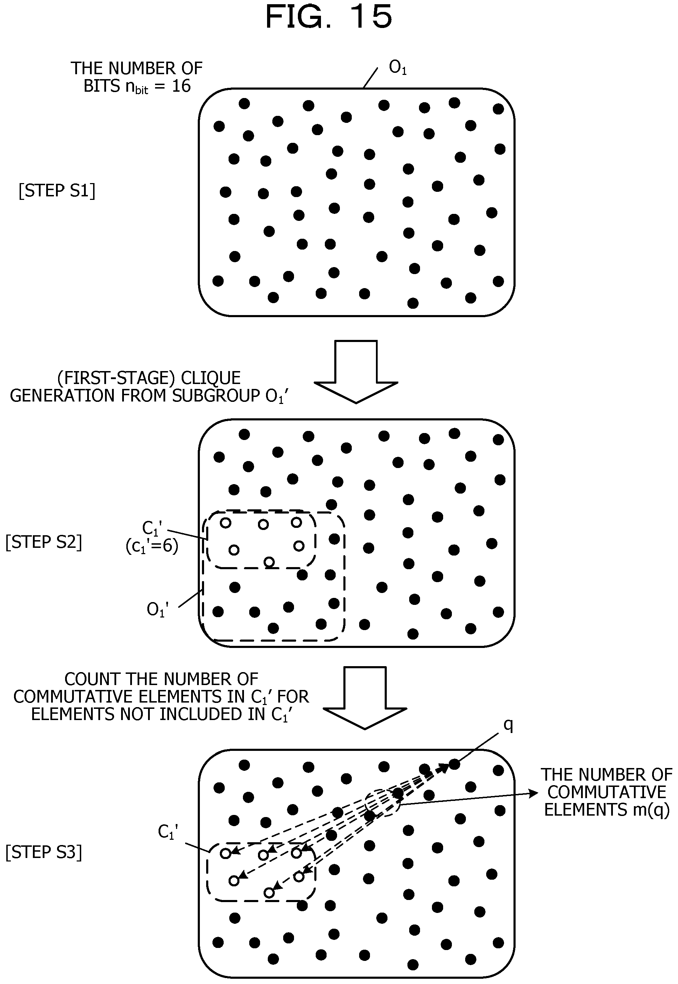

FIG. 15 is a diagram (part 1) illustrating an example of a partitioning method for performing the plurality of times of the clique generation processing in generation of one clique. First, an observable group O to be subjected to partitioning is input (step S1). The observable group O is set as a subgroup $O_1$ used to generate a first clique.

In the example of FIG. 15, it is assumed that the number of bits $n_{bit}$ ($n_{bit}$ is a natural number) that may be used for calculation by the Ising machine 200 is "16". The number of all observables to be measured is larger than the number of bits $n_{bit}$. Each observable is an element of the subgroup $O_1$.

The partitioning unit 120 of the classical computer 100 extracts $n_{bit}$ elements from the subgroup $O_1$, and generates a subgroup $O_1'$ including the $n_{bit}$ elements. Then, the partitioning unit 120 performs processing (first-stage clique generation) of generating a clique $C_1'$ having the maximum number of elements from the subgroup $O_1'$ using the Ising machine 200 (step S2). In the example of FIG. 15, the number of elements $c_1'$ ($c_1'$ is a natural number) included in the clique $C_1'$ is "6".

Next, for each element q not included in the clique $C_1'$, the partitioning unit 120 counts the number of elements $m(q)$ in the clique $C_1'$ having a commutative relation with the element q (step S3). In the example of FIG. 15, since the number of elements $c_1'$ included in the clique $C_1'$ is "6", the number of elements $m(q)$ of the element q is an integer within a range of "0 to 6".

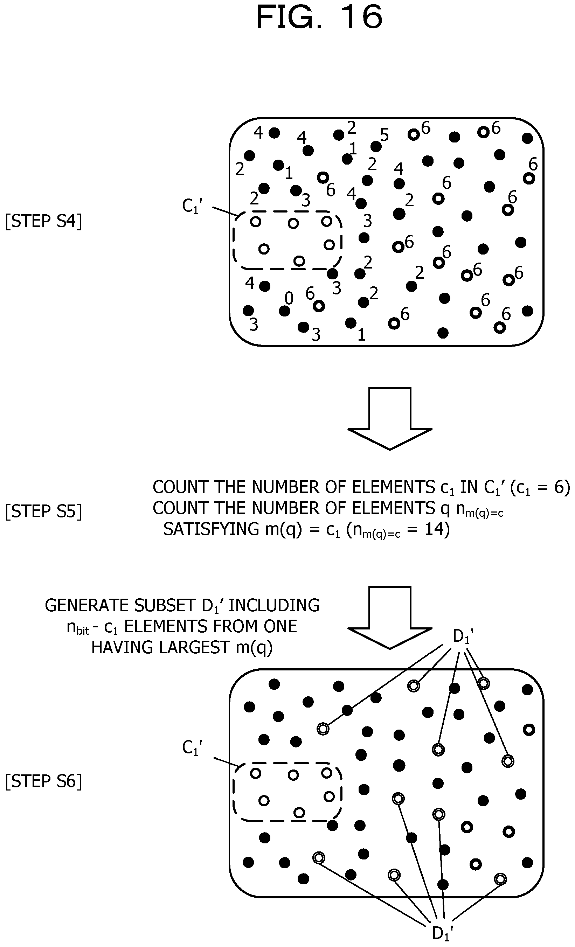

FIG. 16 is a diagram (part 2) illustrating an example of the partitioning method for performing the plurality of times of the clique generation processing in generation of one clique. By the processing of step S3 in FIG. 15, data indicating a value of the number of elements $m(q)$ of each element q not included in the clique $C_1'$ is generated (step S4). In the example of FIG. 16, the value of the number of elements $m(q)$ counted for the element is indicated in the vicinity of the element q not included in the clique $C_1'$.

The partitioning unit 120 counts the number of elements of the generated clique and the number of elements q having the number of elements $m(q)$ equal to or larger than a predetermined value (step S5). For example, the partitioning unit 120 counts the number of elements $c_1$ included in the clique $C_1'$. In the example of FIG. 16, $c_1 = 6$. Furthermore, the partitioning unit 120 counts the number of elements $n_{m(q)=c}$ that satisfy $m(q) = c$ (maximum value of $m(q)$). In the example of FIG. 16, a thick white circle indicated in step S4 is an element that satisfies $m(q) = c = 6$, and there are 14 corresponding elements. Therefore, $n_{m(q)=c} = 14$ is satisfied. The partitioning unit 120 stores values of c and $n_{m(q)=c}$ in the memory 102.

The partitioning unit 120 arranges the elements q not included in the clique $C_1'$ in descending order of the value of $m(q)$. Then, the partitioning unit 120 generates a subset $D_1'$ including the elements q from the one having the largest $m(q)$ to $n_{bit} - c_1$-th one among the elements q (step S6). In the example of FIG. 16, an element included in the subset $D_1'$ is indicated by a double circle.

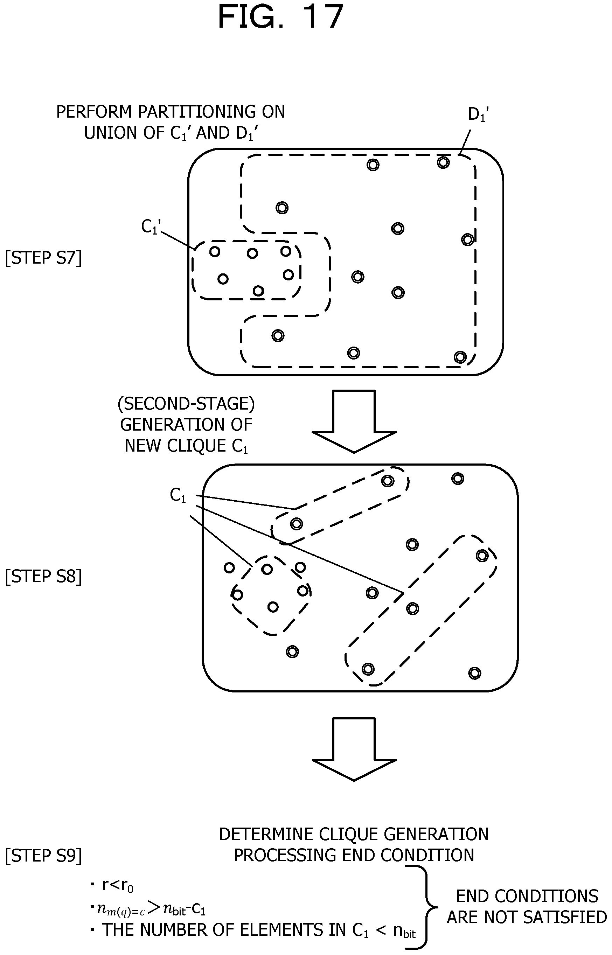

FIG. 17 is a diagram (part 3) illustrating an example of the partitioning method for performing the plurality of times of the clique generation processing in generation of one clique. The partitioning unit 120 performs processing (second-stage clique generation) of generating a clique $C_1$ having the maximum number of elements from a union of the clique $C_1'$ and the subset $D_1'$ using the Ising machine 200 (step S7). As a result, the new clique $C_1$ is generated (step S8). In the example of FIG. 17, elements surrounded by broken lines in step S8 are the elements included in the clique $C_1$.

Next, the partitioning unit 120 determines whether or not the clique generation processing end condition 151 is satisfied (step S9).

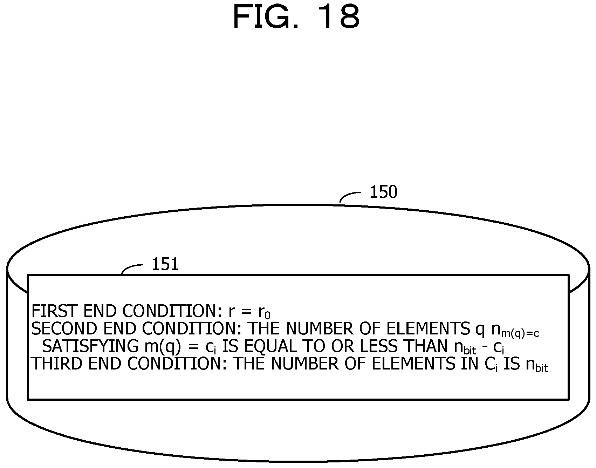

FIG. 18 is a diagram illustrating an example of the clique generation processing end condition. In the example of FIG. 18, three end conditions are indicated in the clique generation processing end condition 151.

A first end condition is a condition for the maximum number of times of repetition $r_0$. When a value of a loop variable r indicating the number of times of repetition of the second-stage clique generation processing for generating one clique has reached the maximum number of times of repetition $r_0$, the first end condition is satisfied. Note that the maximum number of times of repetition $r_0$ is set to a value of equal to or larger than 2 (for example, a value of about 10).

A second end condition is a condition related to presence or absence of an element satisfying $m(q) = c_i$ not included in a subset D' (i = 1, 2, ...). The second end condition is, for example, that the number of elements $n_{m(q)=c}$ satisfying $m(q) = c_i$ is equal to or less than $n_{bit} - c_i$. When the second end condition is satisfied, all elements satisfying $m(q) = c_i$ are included in a subset $D_i'$. In other words, there is no element satisfying $m(q) = c_i$ not included in the subset D'. In that case, the second end condition is satisfied.

A third end condition is that the number of elements included in a clique $C_i$ is equal to the number of bits $n_{bit}$ of the Ising machine 200. In a case where a clique is generated using the Ising machine 200, a maximum value of the number of elements included in the clique is $n_{bit}$. Therefore, in a case where the number of elements included in the clique $C_i$ is equal

to the number of bits $n_{bit}$, the number of elements included in the clique $C_i$ does not increase even when the clique generation processing is continuously repeated more. In that case, the third end condition is satisfied.

When at least one of the plurality of end conditions indicated in the clique generation processing end condition 151 is satisfied, the partitioning unit 120 determines that the end condition of the clique generation processing is satisfied.

Hereinafter, the description returns to FIG. 17. In the example of FIG. 17, it is assumed that $r_0 = 10$ is satisfied. Since loop processing of the second-stage clique generation is a first time (r = 1), the first end condition is not satisfied. Furthermore, in the situation of step S6 illustrated in FIG. 16, an element satisfying $m(q) = c_1$ not included in the subset $D_1'$ is indicated by a thick circle, and there are four corresponding elements. In other words, $n_{m(q)=c} > n_{bit} - c_i$ is satisfied. Therefore, the second end condition is also not satisfied. Moreover, the number of elements of $C_1$ is nine, and the third end condition is also not satisfied.

Therefore, the partitioning unit 120 determines that none of the end conditions is satisfied and the clique generation processing end condition 151 is not satisfied.

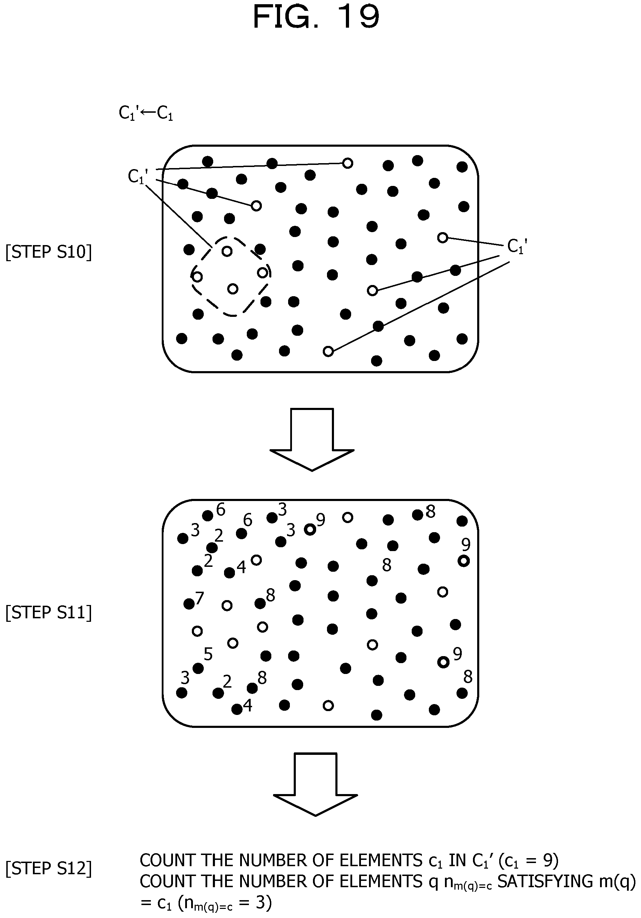

FIG. 19 is a diagram (part 4) illustrating an example of the partitioning method for performing the plurality of times of the clique generation processing in generation of one clique. In a case where the clique generation processing end condition 151 is not satisfied, the partitioning unit 120 updates the elements of the clique $C_1'$ with the elements of the clique $C_1$ (step S10). In other words, the elements of the clique $C_1'$ are replaced with the elements of the clique $C_1$. In the example of FIG. 19, the number of elements $c_1'$ included in the clique $C_1'$ is "9".

Next, for each element q not included in the clique $C_1'$, the partitioning unit 120 counts the number of elements $m(q)$ in the clique $C_1'$ having a commutative relation with the element q (step S11). In the example of FIG. 19, since the number of elements $c_1'$ included in the clique $C_1'$ is "9", the number of elements $m(q)$ of the element q is an integer within a range of "0 to 9". In step S11 of FIG. 19, the value of the number of elements $m(q)$ counted for the element is indicated in the vicinity of the element q not included in the clique $C_1'$.

The partitioning unit 120 counts the number of elements of the generated clique and the number of elements q having the number of elements $m(q)$ equal to or larger than a predetermined value (step S12). For example, the partitioning unit 120 counts the number of elements $c_1$ included in $C_1'$. In the example of FIG. 19, $c_1 = 9$. Furthermore, the partitioning unit 120 counts the number of elements $n_{m(q)=c}$ that satisfy $m(q) = c_1$. In step S11 of FIG. 19, a thick white circle is the element satisfying $m(q) = c_1$. In the example of FIG. 19, since there are three elements satisfying $m(q) = 9$, $n_{m(q)=c} = 3$ is satisfied. The partitioning unit 120 stores values of c and $n_{m(q)=c}$ in the memory 102.

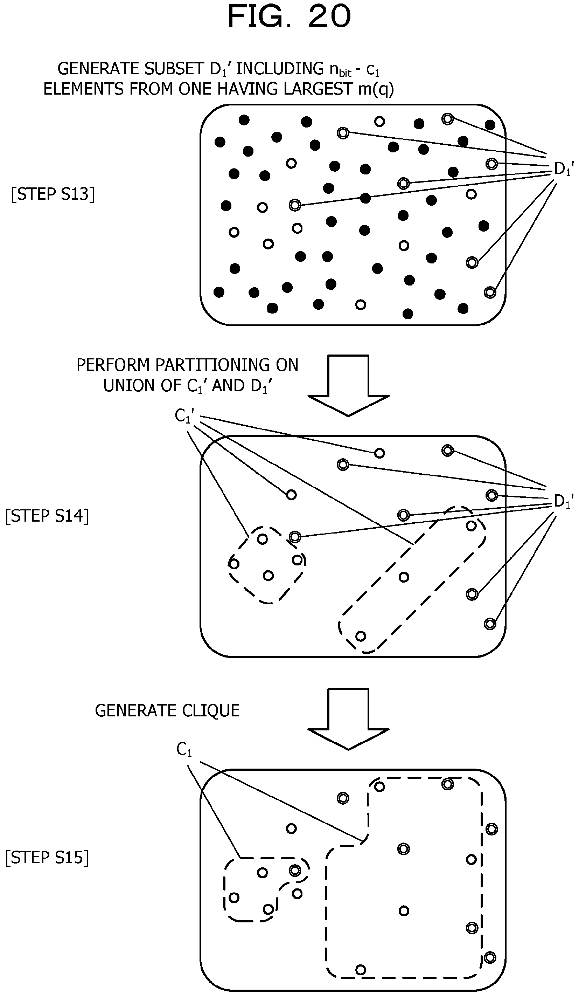

FIG. 20 is a diagram (part 5) illustrating an example of the partitioning method for performing the plurality of times of the clique generation processing in generation of one clique. The partitioning unit 120 arranges the elements q not included in the clique C' in descending order of the value of m(q). Then, the partitioning unit 120 generates the subset $D_1'$ including the elements q from the one having the largest m(q) to $n_{bit} - c_1$-th one among the elements q (step S13). In the example of FIG. 20, an element included in the subset $D_1'$ is indicated by a double circle.

The partitioning unit 120 performs the processing (a second time of the second-stage clique generation processing) of generating the clique $C_1$ having the maximum number of elements from the union of the clique $C_1'$ and the subset $D_1'$ using the Ising machine 200 (step S14). As a result, the new clique $C_1$ is generated (step S15). In the example indicated in step S15, elements surrounded by broken lines are the elements included in the clique $C_1$.

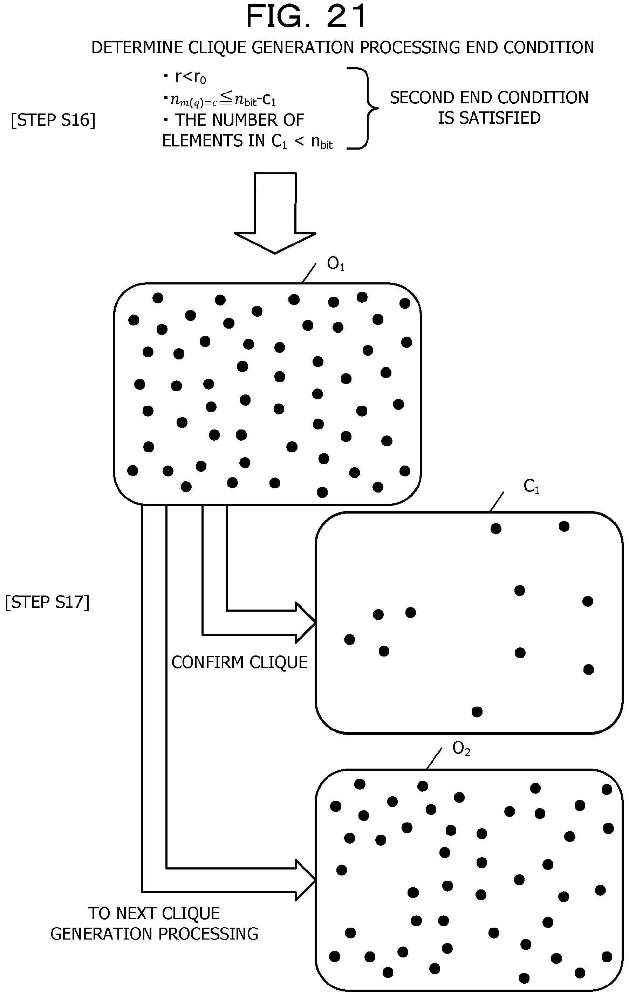

FIG. 21 is a diagram (part 6) illustrating an example of the partitioning method for performing the plurality of times of the clique generation processing in generation of one clique. Next, the partitioning unit 120 determines whether or not the clique generation processing end condition 151 is satisfied (step S16). In the example of FIG. 21, the loop processing of the clique generation is a second time (r = 2), and the first end condition is not satisfied. Furthermore, in the situation of step S14 illustrated in FIG. 20, there is no element satisfying $m(q) = c_1$ not included in the subset $D_1'$. In other words, $n_{m(q)=c} \leq n_{bit} - c_1$ is satisfied. Therefore, the second end condition is satisfied. Moreover, the number of elements of $C_1$ is 11, and the third end condition is not satisfied.

Therefore, since the second end condition is satisfied, the partitioning unit 120 determines that the clique generation processing end condition is satisfied. Then, the partitioning unit 120 confirms the clique $C_1$ generated last as a clique of a partitioning result, and a subgroup $O_2$ obtained by excluding the elements of the clique $C_1$ from the subgroup $O_1$ is subjected to the next clique generation processing (step S17).

In this manner, even in a case where the number of observables to be measured is larger than the number of bits that may be used in the Ising machine 200, it is possible to generate a clique from the entire subgroup $O_1$. In such two-stage clique generation processing, the clique $C_1'$ at an intermediate stage including the elements having a high possibility of being included in a clique having the maximum number of elements among the elements included in the subgroup $O_1$ is generated by the first-stage clique generation.

The element q not included in the clique $C_1'$ is considered to have a higher possibility of being the element included in the clique having the maximum number of elements as the number of elements $m(q)$ in the clique $C_1'$ in a commutative relation is larger. Therefore, by selecting as many elements as possible from the one having the largest number of elements $m(q)$ as the subset $D_1'$, the subset $D_1'$ of the elements having a high possibility of being included in the clique having the maximum number of elements is generated. Then, by generating the clique $C_1$ from the union of the

clique $C_1$' and the subset $D_1$', a clique having a larger number of elements may be generated.

Moreover, in a case where there is an element that may not be included in the subset $D_1$' while the number of elements m(q) is the maximum value, processing similar to steps S3 to S9 is repeatedly executed with the generated clique $C_1$ as the clique $C_1$'. As a result, it is possible to consider elements having a high possibility of being included in the clique having the maximum number of elements without leaking and to generate the final clique $C_1$. As a result, the number of elements included in the clique $C_1$ may be increased. In other words, the number of cliques finally obtained may be decreased.

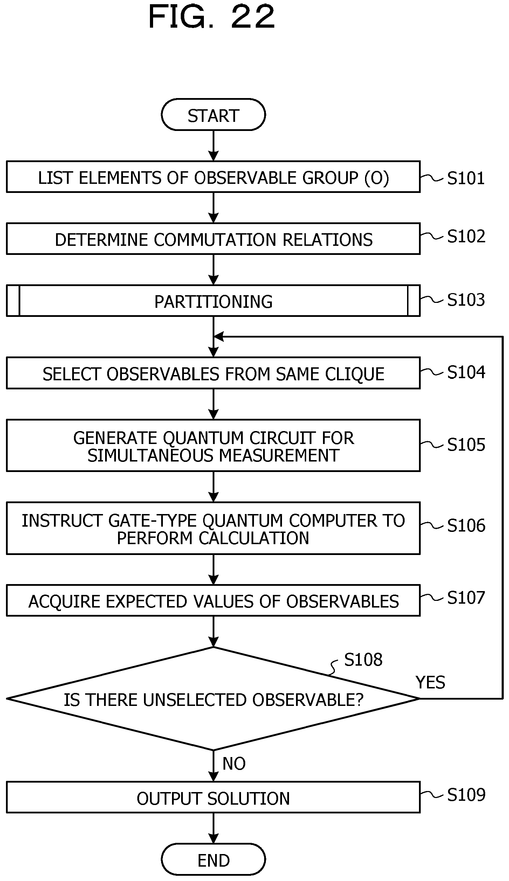

Next, an observable measurement procedure will be described in detail with reference to FIGs. 22 to 25.

FIG. 22 is a flowchart illustrating an example of the observable measurement procedure. Hereinafter, processing illustrated in FIG. 22 will be described in accordance with step numbers.

[Step S101] The commutation relation determination unit 110 lists observables that are elements of the observable group O according to a problem to be solved.

[Step S102] The commutation relation determination unit 110 determines commutation relations among the observables included as the elements in the observable group. For example, the commutation relation determination unit 110 generates all combinations (pairs of observables) obtained by selecting two observables included as the elements of the observable group. Then, the commutation relation determination unit 110 determines, for each pair of observables, whether the pair of observables is commutative or anticommutative based on a relation of commutative/anticommutative between Pauli operators included in the respective observables.

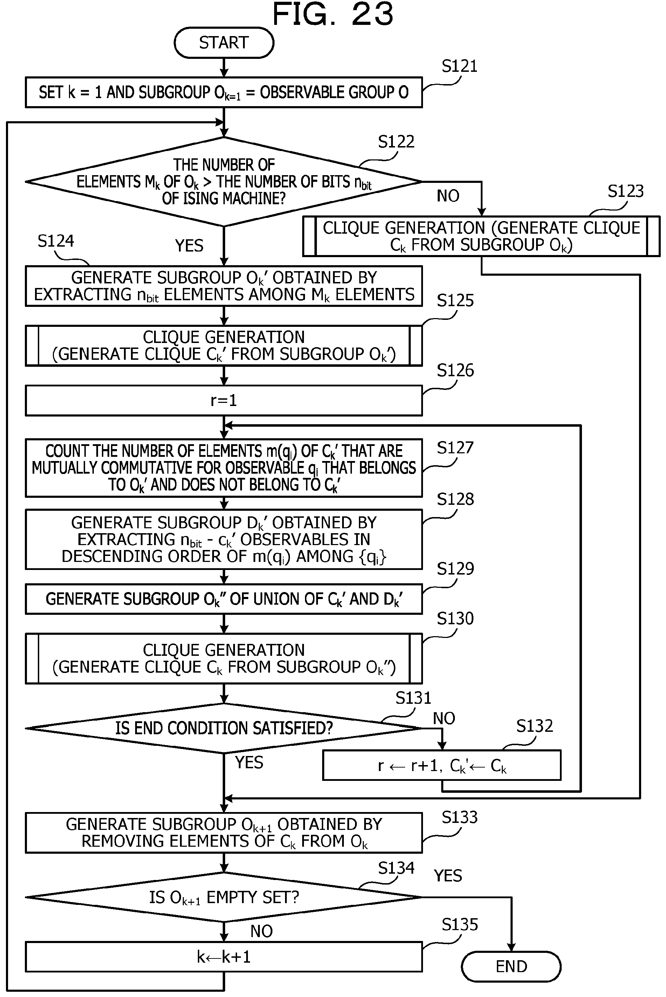

[Step S103] The partitioning unit 120 performs partitioning on the observable group. By the partitioning, one or more cliques are generated. Details of the partitioning processing will be described later (see FIG. 23).

[Step S104] The quantum circuit generation unit 130 selects, from the same clique, a predetermined number of observables for which expected values have not been calculated.

[Step S105] The quantum circuit generation unit 130 generates a quantum circuit for simultaneously measuring the plurality of selected observables.

[Step S106] The expected value acquisition unit 140 transmits the quantum circuit to the gate-type quantum computer 300, and instructs calculation according to the quantum circuit. The gate-type quantum computer 300 repeats the calculation according to the quantum circuit a predetermined number of times, and calculates an expected value of a value of a qubit corresponding to each of the selected observables. The gate-type quantum computer 300 transmits the obtained expected values to the expected value acquisition unit 140.

[Step S107] The expected value acquisition unit 140 acquires the expected values of the observables from the gate-type quantum computer 300.

[Step S108] The quantum circuit generation unit 130 determines whether or not there is an unselected observable. When there is an unselected observable, the quantum circuit generation unit 130 advances the processing to step S104. Furthermore, when all the observables have been selected, the quantum circuit generation unit 130 advances the processing to step S109.

[Step S109] The expected value acquisition unit 140 obtains a solution of the problem to be solved based on the expected values of the observables to be measured, and outputs the obtained solution.

In this manner, the clique in which the observables that may be simultaneously measured are collected is generated by performing the partitioning, and the expected values of the observables included in the same clique are simultaneously measured.

Next, the partitioning processing will be described in detail.

FIG. 23 is a flowchart illustrating an example of a procedure of the partitioning processing. Hereinafter, the processing illustrated in FIG. 23 will be described in accordance with step numbers.

[Step S121] The partitioning unit 120 initializes a value of a variable k indicating the number of times of repetition to "1". Furthermore, the partitioning unit 120 sets the entire observable group O as the subgroup $O_1$ in a case where k = 1 is satisfied. The number of elements $M_1$ of the subgroup $O_1$ is the number of elements of the observable group O.

[Step S122] The partitioning unit 120 determines whether or not the number of elements $M_k$ of a subgroup $O_k$ is larger than the number of bits $n_{bit}$ of the Ising machine 200. In a case where the number of elements $M_k$ of the subgroup $O_k$ is larger, the partitioning unit 120 advances the processing to step S124. Furthermore, when the number of elements $M_k$ of the subgroup $O_k$ is equal to or less than the number of bits $n_{bit}$, the partitioning unit 120 advances the processing to step S123.

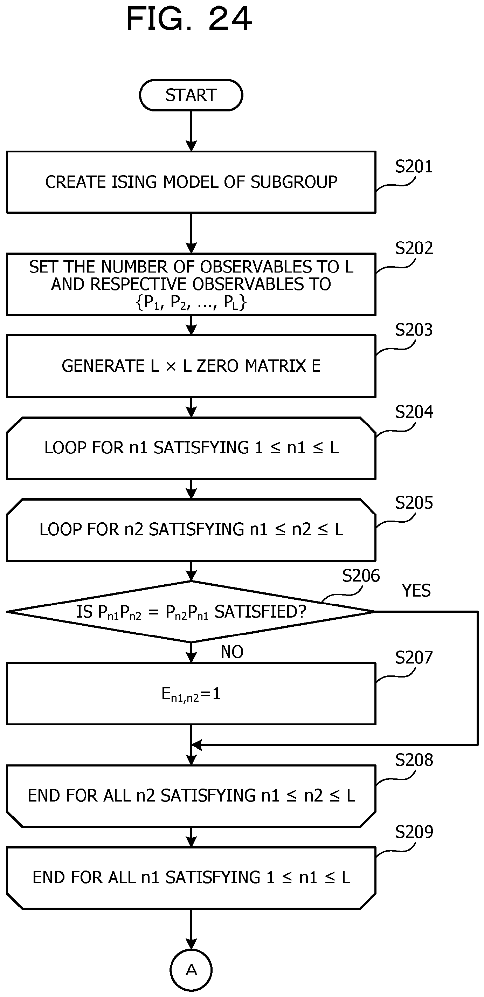

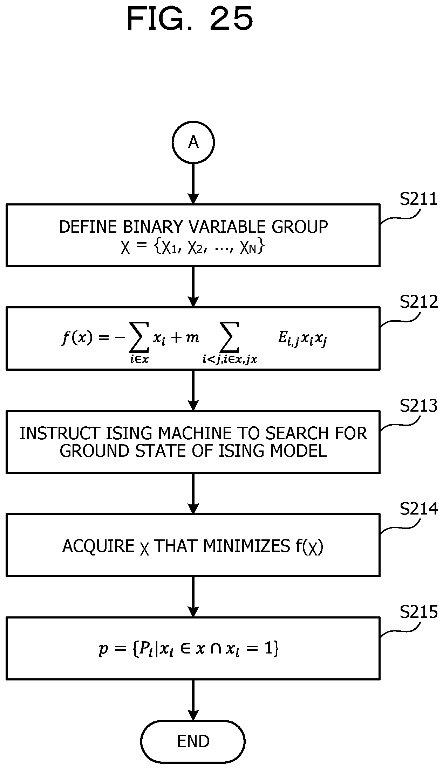

[Step S123] The partitioning unit 120 generates a clique $C_k$ from the subgroup $O_k$. Details of the clique generation processing will be described later (see FIGs. 24 and 25). After generating the clique $C_k$, the partitioning unit 120 advances the processing to step S133.

[Step S124] The partitioning unit 120 generates a subgroup $O_k$' obtained by optionally extracting $n_{bit}$ elements among the $M_k$ elements of the subgroup $O_k$.

[Step S125] The partitioning unit 120 generates a clique $C_k$' having the maximum number of elements from the subgroup $O_k$'. It is assumed that the number of elements included in the clique $C_k$' is $c_k$'. This processing is processing in which the

subgroup $O_k$ in the clique generation processing of step S123 is replaced with the subgroup $O_k'$, and details of the processing are as indicated in FIGs. 24 and 25.

[Step S126] The partitioning unit 120 sets an initial value "1" to the loop variable r (r = 1). Thereafter, the partitioning unit 120 performs the processing of steps S127 to S130 to generate the clique $C_k$.

[Step S127] The partitioning unit 120 counts the number of elements $m(q_i)$ of the clique $C_k'$ that are mutually commutative for each observable $\{q_i\}$ (i = 1, 2, ...) that belongs to the subgroup $O_k'$ and does not belong to the clique $C_k'$.

[Step S128] The partitioning unit 120 generates a subgroup $D_k'$ having, as elements, $n_{bit} - c_k'$ observables in descending order of $m(q_i)$ among the observables $\{q_i\}$.

[Step S129] The partitioning unit 120 generates a subgroup $O_k''$ of a union of the clique $C_k'$ and the subgroup $D_k'$.

[Step S130] The partitioning unit 120 generates the clique $C_k$ having the maximum number of elements from the subgroup $O_k''$. This processing is processing in which the subgroup $O_k$ in the clique generation processing of step S123 is replaced with the subgroup $O_k''$, and details of the processing are as indicated in FIGs. 19 and 20.

[Step S131] The partitioning unit 120 determines whether or not at least one of the end conditions indicated in the clique generation processing end condition 151 is satisfied. In a case where any one of the end conditions is satisfied, the partitioning unit 120 advances the processing to step S133. Furthermore, in a case where none of the end conditions is satisfied, the partitioning unit 120 advances the processing to step S132.

[Step S132] The partitioning unit 120 adds 1 to the loop variable r (r ← r + 1). Furthermore, the partitioning unit 120 substitutes the clique $C_k$ generated in step S130 into the unconfirmed clique $C_k'$ ($C_k' ← C_k$). Then, the partitioning unit 120 advances the processing to step S127.

[Step S133] The partitioning unit 120 generates a subgroup $O_{k+1}$ obtained by removing elements of the clique $C_k$ from the subgroup $O_k$.

[Step S134] The partitioning unit 120 determines whether or not the subgroup $O_{k+1}$ is an empty set. When the subgroup $O_{k+1}$ is an empty set, the partitioning unit 120 ends the partitioning processing. Furthermore, when the subgroup $O_{k+1}$ is not an empty set, the partitioning unit 120 advances the processing to step S135.

[Step S135] The partitioning unit 120 counts up the value of the variable k, and advances the processing to step S122 (k ← k + 1).

In this manner, the generation of the clique $C_k$ is repeatedly executed until all the observables, which are the elements of the observable group O, are included in any one clique. At that time, in a case where the number of elements $M_k$ of the subgroup $O_k$ is larger than the number of bits of the Ising machine 200, the partitioning method of performing the plurality of times of the clique generation processing in generating one clique is applied. In the example of FIG. 23, the clique generation processing is performed twice or more (steps S125 and S130) in generating one clique. By generating the clique through the plurality of times of the clique generation processing, it is possible to generate the clique including more observables even in a case where the number of bits of the Ising machine 200 is insufficient relative to the number of observables.

Next, the clique generation processing in which the subgroup $O_k$, the subgroup $O_k'$, or the subgroup $O_k''$ is set as a subgroup to be subjected to the processing will be described in detail.

FIG. 24 is a flowchart (1/2) illustrating an example of a procedure of the clique generation processing. Hereinafter, the processing illustrated in FIG. 24 will be described in accordance with step numbers.

[Step S201] The partitioning unit 120 creates an Ising model of the subgroup to be subjected to the processing. In the Ising model to be created, a value of a Hamiltonian decreases as the number of observables included in a clique increases.

[Step S202] The partitioning unit 120 sets the number of observables of the subgroup to be subjected to the processing to L (L is a natural number), and sets the respective observables to $\{P_1, P_2, ..., P_L\}$. Each observable is represented by a Pauli string.

[Step S203] The partitioning unit 120 generates an L × L square matrix E in which values of all elements are "0".

[Step S204] The partitioning unit 120 counts up a loop variable n1 from 1 by 1, and repeats processing of steps S205 to S208 until the loop variable n1 becomes L.

[Step S205] The partitioning unit 120 counts up a loop variable n2 from n1 by 1, and repeats the processing of steps S206 and S207 until the loop variable n2 becomes L. [Step S206] The partitioning unit 120 determines whether a pair of an n1-th observable $P_{n1}$ and an n2-th observable $P_{n2}$ is commutative ($P_{n1}P_{n2} = P_{n2}P_{n1}$) or anticommutative ($P_{n1}P_{n2} = -P_{n2}P_{n1}$). In the case of commutative, the partitioning unit 120 advances the processing to step S208. Furthermore, in the case of anticommutative, the partitioning unit 120 advances the processing to step S207.

[Step S207] The partitioning unit 120 changes a value of an element $E_{n1,n2}$ in an n1-th row and an n2-th column of the square matrix E to "1" ($E_{n1,n2} = 1$). In this manner, a value of an element corresponding to a pair of anticommutative observables is changed to "1", and a value of an element corresponding to a pair of commutative observables is maintained at "0".

[Step S208] In a case where the processing of steps S206 and S207 is ended for all n2 from n1 to L, the partitioning unit 120 advances the processing to step S209.

[Step S209] In a case where the processing of steps S205 to S208 is ended for all n1 from 1 to L, the partitioning unit 120 advances the processing to step S211 (see FIG. 25).

FIG. 25 is a flowchart (2/2) illustrating an example of the procedure of the clique generation processing. Hereinafter, the processing illustrated in FIG. 25 will be described in accordance with step numbers.

[Step S211] The partitioning unit 120 defines a binary variable group $\chi = \{\chi_1, \chi_2, ..., \chi_N\}$.

[Step S212] The partitioning unit 120 generates an Ising model. The Ising model is represented by the following expression.

[Expression 2]

$$f(\boldsymbol{x}) = -\sum_{i \in x} x_i + m \sum_{i < j, i \in x, j \in x} E_{i,j} x_i x_j \qquad (2)$$

In Expression (2), m is a positive real number.

[Step S213] The partitioning unit 120 transmits the Ising model to the Ising machine 200, and instructs the Ising machine 200 to search for a ground state of the Ising model. The Ising machine 200 generates the binary variable group $\chi$ that minimizes $f(\chi)$ in the Ising model according to the instruction.

[Step S214] The partitioning unit 120 acquires the binary variable group $\chi$ that minimizes $f(\chi)$ from the Ising machine 200.

[Step S215] The partitioning unit 120 defines an observable set P included in a clique as follows.

[Expression 3]

$$\mathcal{P} = \{P_i | x_i \in \boldsymbol{x} \cap x_i = 1\} \qquad (3)$$

The set P includes an observable corresponding to a variable having a value of "1" in the binary variable group $\chi$ that minimizes $f(\chi)$.

In this manner, by causing the Ising machine 200 to search for the ground state of the Ising model based on the Ising model corresponding to the subset to be subjected to the processing, it is possible to generate the clique having the maximum number of elements. When the object to be subjected to the processing is the subgroup $O_k$, the clique $C_k$ is generated. When the object to be subjected to the processing is the subgroup $O_k'$, the clique $C_k'$ is generated. When the object to be subjected to the processing is the subgroup $O_k''$, the clique $C_k$ is generated.

By the processing of FIGs. 22 to 25, the clique generation processing is repeated a number of times equal to or less than the number of times of repetition $r_0$, and then the clique $C_k$ generated in the last clique generation processing is confirmed as a result of the partitioning. By repeatedly executing the clique generation processing, there is a high possibility that a clique including more elements may be generated. As a result, the number of cliques generated in partitioning may be reduced.

Moreover, since there are the second and third end conditions as the clique generation processing end condition, for example, it is possible to generate a clique including many observables with a small increase in processing amount as compared with the case of only the first end condition. Note that the effect of reducing the number of cliques by performing the clique generation a plurality of times to confirm one clique is higher as the number of bits of the Ising machine 200 is smaller.

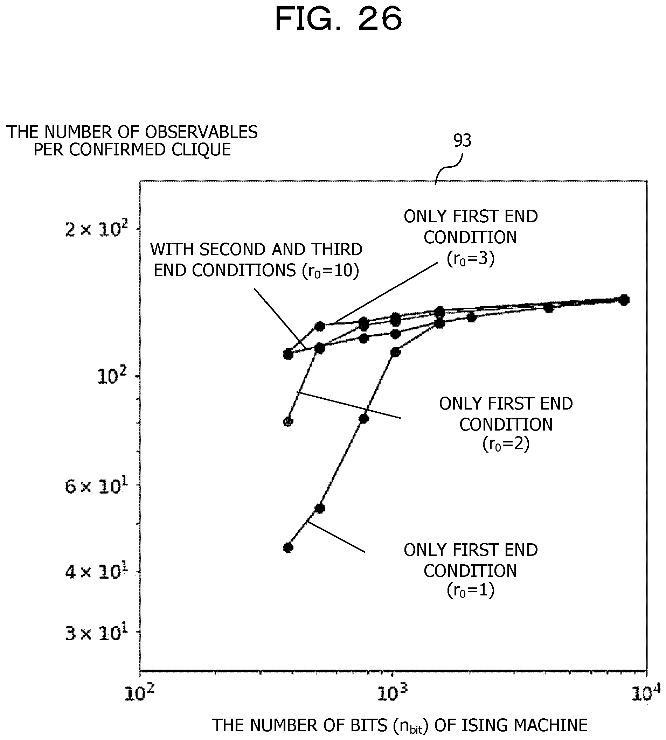

Hereinafter, with reference to FIGs. 26 to 30, a result of performing partitioning under various clique generation processing end conditions will be described. Note that, in the following example, partitioning of an observable (Pauli string) group in a case where a Hamiltonian in a 6-31G basis of $NH_3$ is mapped to 30 qubits using a Jordan-Wigner method is performed. In this example, the number of observables (the number of elements of an observable group) is 52805.

FIG. 26 is a diagram illustrating an effect of reducing the number of cliques according to the number of bits of an Ising machine. In a graph 93 illustrated in FIG. 26, a horizontal axis represents the number of bits of the Ising machine 200, and a vertical axis represents the number of observables per confirmed clique. The number of observables per confirmed clique is a value obtained by dividing the number of elements of the observable group to be subjected to partitioning by the number of cliques obtained as a result of the partitioning.

The graph 93 illustrates a result of the partitioning for each number of bits of the Ising machine 200 in a case where only the first end condition is applied as the clique generation processing end condition and in a case where the second and third end conditions are also applied. For the case where only the first end condition is applied, a case of $r_0 = 1$ (loop processing is not repeated), a case of $r_0 = 2$, and a case of $r_0 = 3$ are indicated. The first end condition in a case where the second and third end conditions are applied in addition to the first end condition is $r_0 = 10$.

As may be seen also from the graph 93, as the number of bits $n_{bit}$ of the Ising machine 200 is smaller, the effect of reducing the number of observables by repeating the loop processing becomes more remarkable as compared with the case where the loop processing is not repeated.

Additionally, in a case where only the first end condition is applied, as the value of $r_0$ is increased, the number of observables per confirmed clique increases. In other words, the number of cliques obtained as a result of the partitioning is reduced. In a case where the second and third end conditions are added, the second or third end condition is often satisfied before the first end condition is satisfied, and the effect of reducing the number of cliques similar to that in a case where only the first end condition is applied with $r_0 = 3$ is obtained.

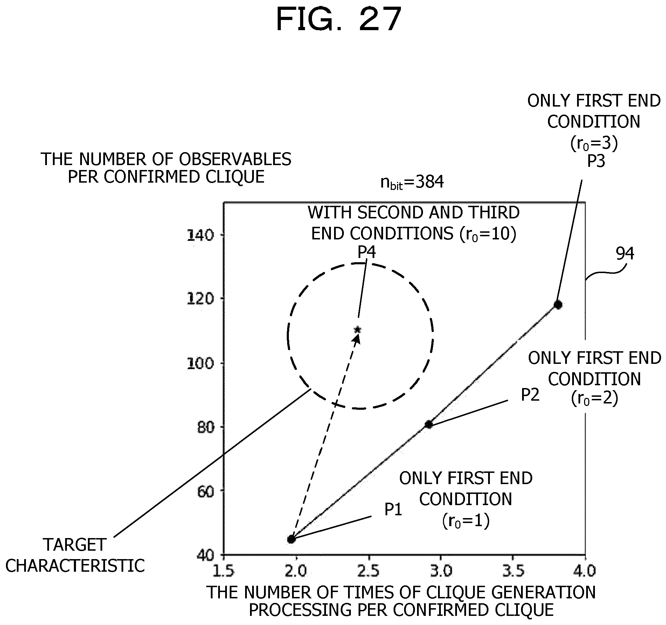

FIG. 27 is a diagram illustrating a first example of a relation between a processing amount and the number of observables in a clique. A graph 94 indicates a relation between the processing amount and the number of observables in the clique in a case where the number of bits $n_{bit}$ of the Ising machine 200 is 384. A horizontal axis of the graph 94 represents the number of times of the clique generation processing per confirmed clique. Furthermore, a vertical axis of the graph 94 represents the number of observables per confirmed clique.

In the partitioning using the Ising machine 200, the ground state search processing of the Ising model by the Ising machine 200 has the largest processing load. Therefore, in the example of FIG. 27, the number of times of the clique generation processing per confirmed clique (the same as the number of times of the ground state search processing of the Ising model) is used as an index of the processing amount.

Points P1, P2, and P3 in the graph 94 are examples in a case where the end condition in the clique generation processing end condition 151 is only the first end condition. The point P1 indicates a partitioning result in the case of $r_0 = 1$. The point P2 indicates a partitioning result in the case of $r_0 = 2$. The point P3 indicates a partitioning result in the case of $r_0 = 3$.

A point P4 indicates a partitioning result in a case where the second and third end conditions are included in the end conditions in the clique generation processing end condition 151. Note that, in the partitioning when the point P4 is obtained, the first end condition is a sufficiently large value ($r_0 = 10$).

In the case of only the first end condition, the larger the value of $r_0$, the larger the number of times of the clique generation processing (processing amount) per confirmed clique. Furthermore, in the case of only the first end condition, the larger the value of $r_0$, the larger the number of observables per confirmed clique. In this manner, as the number of times of the clique generation processing executed before one clique is confirmed increases, the number of observables per clique increases.

Here, in order to improve efficiency of the partitioning processing, it is desirable to obtain such a characteristic that an increase amount of the number of observables per clique according to an increase amount of the processing increases. For example, in a case where the point P1 ($r_0 = 1$) is used as a reference, it is desired that the characteristic of the partitioning processing (the relation between the processing amount and the number of observables in the clique) becomes a characteristic (target characteristic) within a range indicated by a broken-line circle in FIG. 27.

In a case where the second and third end conditions are added as the clique generation processing end condition, the characteristic of the partitioning processing falls within the range of the target characteristic. In other words, when the second and third end conditions are added, the number of observables per confirmed clique is larger than that in the case of only the first end condition with $r_0 = 2$ even though the number of times of the clique generation processing per confirmed clique is small.

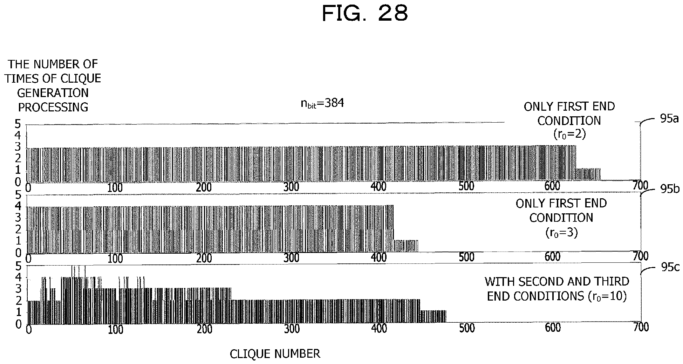

FIG. 28 is a diagram illustrating a first example of the number of times of the clique generation processing for each confirmed clique. Graphs 95a to 95c indicate the number of times of the clique generation processing executed until each clique is confirmed when partitioning ($n_{bit} = 384$, the number of elements of the observable group is 52805) corresponding to each of the points P2 to P4 illustrated in FIG. 27 is performed.

Horizontal axes of the graphs 95a to 95c represent numbers assigned to the confirmed cliques in ascending order from an earliest confirmed one. Vertical axes of the graphs 95a to 95c represent the number of times of the clique generation processing executed until each clique is confirmed. The graph 95a indicates a result of the partitioning in a case where only the first end condition with $r_0 = 2$ is set as the clique generation processing end condition 151. The graph 95b indicates a result of the partitioning in a case where only the first end condition with $r_0 = 3$ is set as the clique generation processing end condition 151. The graph 95c indicates a result of the partitioning in a case where the second and third end conditions are set as the clique generation processing end condition 151 in addition to the first end condition with $r_0 = 10$.

In a case where only the first end condition is applied, the clique generation processing is performed at least once in order to confirm one clique (step S123 or step S125 in FIG. 23). Then, while the number of observables not included in the confirmed clique exceeds the number of bits of the Ising machine 200, the clique generation processing (step S130 in FIG. 23) is further executed for the number of times of the value of $r_0$. Therefore, for example, in the case of $r_0 = 2$, the clique generation processing is performed up to three times before one clique is confirmed. Furthermore, in the case of $r_0 = 3$, the clique generation processing is performed up to four times before one clique is confirmed.

From comparison between the graph 95a and the graph 95b, it may be seen that when the value of $r_0$ increases, the number of times of the clique generation processing until one clique is confirmed increases, but the number of cliques to be generated decreases.

As indicated in the graph 95c, in a case where the second and third end conditions are applied, the number of times of the clique generation processing executed until one clique is confirmed varies. In the example of FIG. 28, five times of the clique generation processing may be performed to confirm the clique, but in many cases, the clique may be confirmed by two times of the clique generation processing. Therefore, the total number of times of execution of the clique generation processing is smaller than that in a case where the second and third end conditions are not applied. Furthermore, the number of cliques obtained as a result of the partitioning is slightly larger than that in a case where only the first end condition with $r_0 = 3$ is applied, and it may be seen that the partitioning that may obtain a high effect may be efficiently executed.

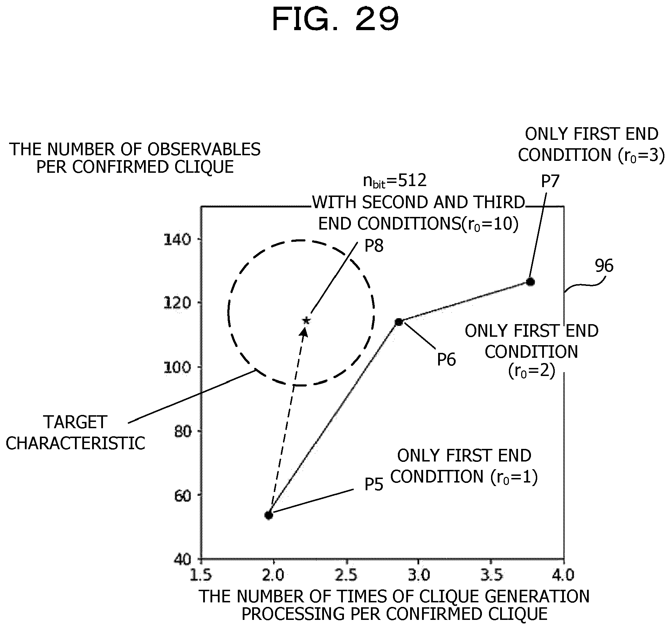

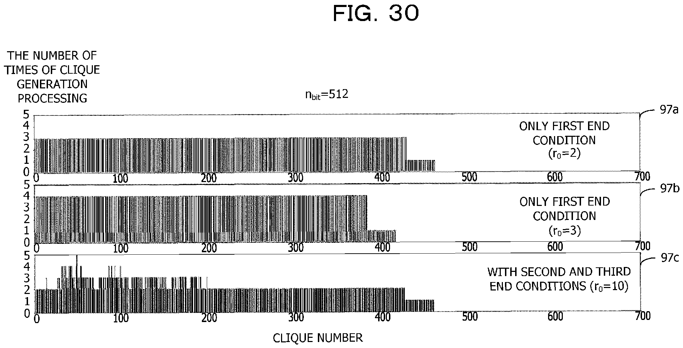

Note that the processing of confirming one clique by executing the clique generation processing using the Ising machine 200 a plurality of times is more effective as the number of bits of the Ising machine 200 relative to the number of elements of the observable group is smaller. Although the number of bits of the Ising machine 200 is 384 in the examples illustrated in FIGs. 27 and 28, examples in which the number of bits is 512 are illustrated in FIGs. 29 and 30.

FIG. 29 is a diagram illustrating a second example of the relation between the processing amount and the number of observables in the clique. A graph 96 indicates a result of performing the partitioning under the same condition as in the example of FIG. 27 except that the number of bits $n_{bit}$ of the Ising machine 200 is 512.

Points P5, P6, and P7 in the graph 96 are examples in a case where the end condition in the clique generation processing end condition 151 is only the first end condition. The point P5 indicates a partitioning result in the case of $r_0 = 1$. The point P6 indicates a partitioning result in the case of $r_0 = 2$. The point P7 indicates a partitioning result in the case of $r_0 = 3$.

A point P8 indicates a partitioning result in a case where the second and third end conditions are included in the end conditions in the clique generation processing end condition 151. Note that, in the partitioning when the point P8 is obtained, the first end condition is a sufficiently large value ($r_0 = 10$).

As illustrated in FIG. 29, even when the number of bits of the Ising machine 200 increases, the second and third end conditions are added to the clique generation processing end condition 151, so that the characteristic of the partitioning becomes the target characteristic. In other words, the number of cliques may be greatly reduced with a small increase in a calculation amount.

FIG. 30 is a diagram illustrating a second example of the number of times of the clique generation processing for each confirmed clique. Graphs 97a to 97c indicate the number of times of the clique generation processing executed until each clique is confirmed when partitioning ($n_{bit} = 512$, the number of elements of the observable group is 52805) corresponding to each of the points P5 to P8 illustrated in FIG. 29 is performed.

Horizontal axes of the graphs 97a to 97c represent numbers assigned to the confirmed cliques in ascending order from an earliest confirmed one. Vertical axes of the graphs 97a to 97c represent the number of times of the clique generation processing executed until each clique is confirmed. The graph 97a indicates a result of the partitioning in a case where only the first end condition with $r_0 = 2$ is set as the clique generation processing end condition 151. The graph 97b indicates a result of the partitioning in a case where only the first end condition with $r_0 = 3$ is set as the clique generation processing end condition 151. The graph 97c indicates a result of the partitioning in a case where the second and third end conditions are set as the clique generation processing end condition 151 in addition to the first end condition with $r_0 = 10$.

In the case of $n_{bit} = 512$, the effect of reducing the number of cliques as compared with the case where only the first end condition with $r_0 = 2$ is applied is small, but the number of times of execution of the clique generation processing may be greatly reduced. In other words, it is indicated that the number of cliques may be reduced with a small calculation amount even when the number of bits of the Ising machine 200 increases.

[Other Embodiments]

Instead of the second end condition in the second embodiment, for example, a condition that the number of elements q in which m(q) is equal to or larger than a predetermined threshold is equal to or less than $n_{bit} - c_i$ may be applied. The threshold at this time is a value equal to or less than $c_i$ (for example, a value obtained by multiplying $c_i$ by 0.9).

Furthermore, instead of the third end condition in the second embodiment, a condition that the number of elements of $C_i$ is equal to or larger than a predetermined threshold may be applied. The threshold at this time is a value equal to or less than $n_{bit}$ (for example, a value obtained by multiplying $n_{bit}$ by 0.9).

REFERENCE SIGNS LIST

1    Ising machine
2    Observable group
3    First group

4       First clique
5       Second group
6       Second clique
7       Union
10      Information processing device
11      Storage unit
12      Processing unit

**Claims**

1.  A partitioning program for multi-qubit observables, the partitioning program comprising instructions which, when executed by a computer, cause the computer to execute processing comprising generating a final second clique, for simultaneous measurement by a quantum computer of observables therein, by:

    causing an Ising machine to calculate a solution of a first combinatorial optimization problem that searches for a combination that includes two or more observables, which is a combination of observables in a first group (3) that includes at least two observables of a plurality of observables to be measured, and which satisfies a condition that simultaneous measurement of expected values is possible for optional two observables included in the combination;

    generating a first clique (4) that indicates a combination of observables indicated in the solution of the first combinatorial optimization problem;

    generating a second group (5) that includes a predetermined number of observables not included in the first clique (4) based on the number of observables in the first clique (4), for which simultaneous measurement of the expected values is possible for each of observables not included in the first clique (4);

    causing the Ising machine to calculate a solution of a second combinatorial optimization problem that searches for a combination that includes two or more observables, which is a combination of observables in a union of the first clique (4) and the second group (5), and which satisfies a condition that simultaneous measurement of the expected values is possible for optional two observables included in the combination;

    generating a second clique (6) that indicates a combination of observables indicated in the solution of the second combinatorial optimization problem; and

    repeating, until a predetermined end condition is satisfied, processing of updating the observables included in the first clique (4) with the observables included in the second clique (6), the processing of generating the second group (5), the processing of causing the Ising machine to calculate the solution of the second combinatorial optimization problem, and the processing of generating the second clique (6), wherein the second clique generated last is the final second clique.

2.  The partitioning program for multi-qubit observables according to claim 1, wherein,

    in the processing of generating the second group (5),

    for each of the observables not included in the first clique (4), the number of commutative observables that indicates the number of observables in the first clique (4) for which the simultaneous measurement of the expected values is possible is counted, and

    the second group (5) that includes a predetermined number of observables in descending order of the number of commutative observables among the observables not included in the first clique (4) is generated.

3.  The partitioning program for multi-qubit observables according to claim 2, wherein the predetermined end condition includes a condition that the number of observables that have the number of commutative observables equal to or larger than a predetermined value among the observables not included in the first clique (4) is equal to or less than a value obtained by subtracting the number of observables included in the first clique (4) from the number of bits used for calculation by the Ising machine.

4.  The partitioning program for multi-qubit observables according to claim 1, wherein the predetermined end condition includes a condition that the number of times of execution of the processing of generating the second clique (6) has reached a predetermined value.

5.  The partitioning program for multi-qubit observables according to claim 1, wherein the predetermined end condition includes a condition that the number of observables included in the second clique is equal to the number of bits used for calculation by the Ising machine.

**6.** The partitioning program for multi-qubit observables according to any one of claims 1 to 5, wherein,
in the processing of causing the solution of the first combinatorial optimization problem to be calculated, the first group (3) that includes the same number of observables as the number of bits used for calculation by the Ising machine is generated, the Ising machine is instructed to search for the solution of the first combinatorial optimization problem according to the generated first group (3), and the solution of the first combinatorial optimization problem is acquired from the Ising machine.

**7.** The partitioning program for multi-qubit observable according to claim 6, wherein,

in the processing of generating the second group (5), the second group (5) that includes the same number of observables as a difference between the number of bits usable for calculation by the Ising machine and the number of observables included in the first clique (4) is generated, and
in the processing of causing the solution of the second combinatorial optimization problem to be calculated, the Ising machine is instructed to search for the solution of the second combinatorial optimization problem according to the generated second group, and the solution of the second combinatorial optimization problem is acquired from the Ising machine.

**8.** A computer-implemented partitioning method for multi-qubit observables, the computer-implemented partitioning method comprising generating a final second clique, for simultaneous measurement by a quantum computer of observables therein, by:

causing an Ising machine to calculate a solution of a first combinatorial optimization problem that searches for a combination that includes two or more observables, which is a combination of observables in a first group (3) that includes at least two observables of a plurality of observables to be measured, and which satisfies a condition that simultaneous measurement of expected values is possible for optional two observables included in the combination;
generating a first clique (4) that indicates a combination of observables indicated in the solution of the first combinatorial optimization problem;
generating a second group (5) that includes a predetermined number of observables not included in the first clique (4) based on the number of observables in the first clique (4), for which simultaneous measurement of the expected values is possible for each of observables not included in the first clique (4);
causing the Ising machine to calculate a solution of a second combinatorial optimization problem that searches for a combination that includes two or more observables, which is a combination of observables in a union of the first clique (4) and the second group (5), and which satisfies a condition that simultaneous measurement of the expected values is possible for optional two observables included in the combination;
generating a second clique (6) that indicates a combination of observables indicated in the solution of the second combinatorial optimization problem; and
repeating, until a predetermined end condition is satisfied, processing of updating the observables included in the first clique (4) with the observables included in the second clique (6), the processing of generating the second group (5), the processing of causing the Ising machine to calculate the solution of the second combinatorial optimization problem, and the processing of generating the second clique (6), wherein the second clique generated last is the final second clique.

**9.** An information processing device comprising:
a processing unit configured to generate a final second clique, for simultaneous measurement by a quantum computer of observables therein, by:

causing an Ising machine to calculate a solution of a first combinatorial optimization problem that searches for a combination that includes two or more observables, which is a combination of observables in a first group (3) that includes at least two observables of a plurality of observables to be measured, and which satisfies a condition that simultaneous measurement of expected values is possible for optional two observables included in the combination;
generating a first clique (4) that indicates a combination of observables indicated in the solution of the first combinatorial optimization problem;
generating a second group (5) that includes a predetermined number of observables not included in the first clique (4) based on the number of observables in the first clique (4), for which simultaneous measurement of the expected values is possible for each of observables not included in the first clique (4);
causing the Ising machine to calculate a solution of a second combinatorial optimization problem that searches for a combination that includes two or more observables, which is a combination of observables in a union of the first clique (4) and the second group (5), and which satisfies a condition that simultaneous measurement of the expected values is possible for optional two observables included in the combination;

generating a second clique (6) that indicates a combination of observables indicated in the solution of the second combinatorial optimization problem; and

repeating, until a predetermined end condition is satisfied, processing of updating the observables included in the first clique (4) with the observables included in the second clique (6), the processing of generating the second group (5), the processing of causing the Ising machine to calculate the solution of the second combinatorial optimization problem, and the processing of generating the second clique (6), wherein the second clique generated last is the final second clique.

**Patentansprüche**

1. Partitionierungsprogramm für Mehrfach-Qubit-Observables, wobei das Partitionierungsprogramm Anweisungen umfasst, die, wenn sie durch einen Computer ausgeführt werden, den Computer veranlassen, eine Verarbeitung, die ein Erzeugen einer endgültigen zweiten Clique zur gleichzeitigen Messung von Observables darin durch einen Quantencomputer umfasst, durch Folgendes auszuführen:

Veranlassen einer Ising-Maschine, eine Lösung eines ersten kombinatorischen Optimierungsproblems zu berechnen, die nach einer Kombination sucht, die zwei oder mehr Observables einschließt, die eine Kombination von Observables in einer ersten Gruppe (3) ist, die mindestens zwei Observables einer Vielzahl von zu messenden Observables einschließt, und die eine Bedingung erfüllt, dass ein simultane Messung von erwarteten Werten für optional zwei in der Kombination eingeschlossene Observables möglich ist;

Erzeugen einer ersten Clique (4), die eine Kombination von Observables angibt, die in der Lösung des ersten kombinatorischen Optimierungsproblems angegeben sind;

Erzeugen einer zweiten Gruppe (5), die eine vorbestimmte Anzahl von nicht in der ersten Clique (4) eingeschlossenen Observables einschließt, basierend auf der Anzahl von Observables in der ersten Clique (4), für die eine simultane Messung der erwarteten Werte für jede der nicht in der ersten Clique (4) eingeschlossenen Observables möglich ist;

Veranlassen der Ising-Maschine, eine Lösung eines zweiten kombinatorischen Optimierungsproblems zu berechnen, die nach einer Kombination sucht, die zwei oder mehr Observables einschließt, die eine Kombination von Observables in einer Vereinigung der ersten Clique (4) und der zweiten Gruppe (5) ist, und die eine Bedingung erfüllt, dass eine simultane Messung der erwarteten Werte für optional zwei in der Kombination eingeschlossene Observables möglich ist;

Erzeugen einer zweiten Clique (6), die eine Kombination von Observables angibt, die in der Lösung des zweiten kombinatorischen Optimierungsproblems angegeben sind; und

Wiederholen der Verarbeitung eines Aktualisierens der in der ersten Clique (4) eingeschlossenen Observables mit den in der zweiten Clique (6) eingeschlossenen Observables, der Verarbeitung des Erzeugens der zweiten Gruppe (5), der Verarbeitung des Veranlassens der Ising-Maschine, die Lösung des zweiten kombinatorischen Optimierungsproblems zu berechnen, und der Verarbeitung des Erzeugens der zweiten Clique (6), bis eine vorbestimmte Endbedingung erfüllt ist, wobei die zuletzt erzeugte zweite Clique die endgültige zweite Clique ist.

2. Partitionierungsprogramm für Mehrfach-Qubit-Observables nach Anspruch 1, wobei,

bei der Verarbeitung des Erzeugens der zweiten Gruppe (5) für jede der nicht in der ersten Clique (4) eingeschlossenen Observables die Anzahl von kommutativen Observables gezählt wird, die die Anzahl der Observables in der ersten Clique (4) angibt, für die die simultane Messung der erwarteten Werte möglich ist, und die zweite Gruppe (5), die eine vorbestimmte Anzahl von Observables in absteigender Reihenfolge der Anzahl von kommutativen Observables unter den nicht in der ersten Clique (4) eingeschlossenen Observables einschließt, erzeugt wird.

3. Partitionierungsprogramm für Mehrfach-Qubit-Observables nach Anspruch 2, wobei die vorbestimmte Endbedingung eine Bedingung einschließt, dass die Anzahl von Observables, die die Anzahl von kommutativen Observables gleich oder größer als ein vorbestimmter Wert unter den nicht in der ersten Clique (4) eingeschlossenen Observables aufweisen, gleich oder kleiner als ein Wert ist, der durch Subtrahieren der Anzahl von in der ersten Clique (4) eingeschlossenen Observables von der Anzahl von durch die Ising-Maschine zur Berechnung verwendeten Bits erhalten wird.

4. Partitionierungsprogramm für Mehrfach-Qubit-Observables nach Anspruch 1, wobei
die vorbestimmte Endbedingung eine Bedingung einschließt, dass die Anzahl von Malen der Ausführung der Verarbeitung des Erzeugens der zweiten Clique (6) einen vorbestimmten Wert erreicht hat.

5. Partitionierungsprogramm für Mehrfach-Qubit-Observables nach Anspruch 1, wobei
die vorbestimmte Endbedingung eine Bedingung einschließt, dass die Anzahl von in der zweiten Clique eingeschlossenen Observables gleich der Anzahl von durch die Ising-Maschine zur Berechnung verwendeten Bits ist.

6. Partitionierungsprogramm für Mehrfach-Qubit-Observables nach einem der Ansprüche 1 bis 5, wobei,
bei der Verarbeitung des Veranlassens, die Lösung des ersten kombinatorischen Optimierungsproblems zu berechnen, die erste Gruppe (3), die die gleiche Anzahl von Observables wie die Anzahl von durch die Ising-Maschine zur Berechnung verwendeten Bits einschließt, erzeugt wird, die Ising-Maschine angewiesen wird, nach der Lösung des ersten kombinatorischen Optimierungsproblems gemäß der erzeugten ersten Gruppe (3) zu suchen, und die Lösung des ersten kombinatorischen Optimierungsproblems von der Ising-Maschine erlangt wird.

7. Partitionierungsprogramm für Mehrfach-Qubit-Observables nach Anspruch 6, wobei,

bei der Verarbeitung des Erzeugens der zweiten Gruppe (5) die zweite Gruppe (5), die die gleiche Anzahl von Observables wie eine Differenz zwischen der Anzahl von durch die Ising-Maschine zur Berechnung verwendbaren Bits und der Anzahl von in der ersten Clique (4) eingeschlossenen Observables einschließt, erzeugt wird, und
bei der Verarbeitung des Veranlassens, die Lösung des zweiten kombinatorischen Optimierungsproblems zu berechnen, die Ising-Maschine angewiesen wird, nach der Lösung des zweiten kombinatorischen Optimierungsproblems gemäß der erzeugten zweiten Gruppe zu suchen, und die Lösung des zweiten kombinatorischen Optimierungsproblems von der Ising-Maschine erlangt wird.

8. Computerimplementiertes Partitionierungsverfahren für Mehrfach-Qubit-Observables, wobei das computerimplementierte Partitionierungsverfahren ein Erzeugen einer endgültigen zweiten Clique zur gleichzeitigen Messung von Observables darin durch einen Quantencomputer durch Folgendes umfasst:

Veranlassen einer Ising-Maschine, eine Lösung eines ersten kombinatorischen Optimierungsproblems zu berechnen, die nach einer Kombination sucht, die zwei oder mehr Observables einschließt, die eine Kombination von Observables in einer ersten Gruppe (3) ist, die mindestens zwei Observables einer Vielzahl von zu messenden Observables einschließt, und die eine Bedingung erfüllt, dass ein simultane Messung von erwarteten Werten für optional zwei in der Kombination eingeschlossene Observables möglich ist;
Erzeugen einer ersten Clique (4), die eine Kombination von Observables angibt, die in der Lösung des ersten kombinatorischen Optimierungsproblems angegeben sind;
Erzeugen einer zweiten Gruppe (5), die eine vorbestimmte Anzahl von nicht in der ersten Clique (4) eingeschlossenen Observables einschließt, basierend auf der Anzahl von Observables in der ersten Clique (4), für die eine simultane Messung der erwarteten Werte für jede der nicht in der ersten Clique (4) eingeschlossenen Observables möglich ist;
Veranlassen der Ising-Maschine, eine Lösung eines zweiten kombinatorischen Optimierungsproblems zu berechnen, die nach einer Kombination sucht, die zwei oder mehr Observables einschließt, die eine Kombination von Observables in einer Vereinigung der ersten Clique (4) und der zweiten Gruppe (5) ist, und die eine Bedingung erfüllt, dass eine simultane Messung der erwarteten Werte für optional zwei in der Kombination eingeschlossene Observables möglich ist;
Erzeugen einer zweiten Clique (6), die eine Kombination von Observables angibt, die in der Lösung des zweiten kombinatorischen Optimierungsproblems angegeben sind; und
Wiederholen der Verarbeitung eines Aktualisierens der in der ersten Clique (4) eingeschlossenen Observables mit den in der zweiten Clique (6) eingeschlossenen Observables, der Verarbeitung des Erzeugens der zweiten Gruppe (5), der Verarbeitung des Veranlassens der Ising-Maschine, die Lösung des zweiten kombinatorischen Optimierungsproblems zu berechnen, und der Verarbeitung des Erzeugens der zweiten Clique (6), bis eine vorbestimmte Endbedingung erfüllt ist, wobei die zuletzt erzeugte zweite Clique die endgültige zweite Clique ist.

9. Informationsverarbeitungsvorrichtung, umfassend:
eine Verarbeitungseinheit, die konfiguriert ist, eine endgültige zweite Clique zur gleichzeitigen Messung von Observables darin durch einen Quantencomputer durch Folgendes zu erzeugen:

Veranlassen einer Ising-Maschine, eine Lösung eines ersten kombinatorischen Optimierungsproblems zu berechnen, die nach einer Kombination sucht, die zwei oder mehr Observables einschließt, die eine Kombination von Observables in einer ersten Gruppe (3) ist, die mindestens zwei Observables einer Vielzahl von zu messenden Observables einschließt, und die eine Bedingung erfüllt, dass ein simultane Messung von erwarteten Werten für optional zwei in der Kombination eingeschlossene Observables möglich ist;

Erzeugen einer ersten Clique (4), die eine Kombination von Observables angibt, die in der Lösung des ersten kombinatorischen Optimierungsproblems angegeben sind;

Erzeugen einer zweiten Gruppe (5), die eine vorbestimmte Anzahl von nicht in der ersten Clique (4) eingeschlossenen Observables einschließt, basierend auf der Anzahl von Observables in der ersten Clique (4), für die eine simultane Messung der erwarteten Werte für jede der nicht in der ersten Clique (4) eingeschlossenen Observables möglich ist;

Veranlassen der Ising-Maschine, eine Lösung eines zweiten kombinatorischen Optimierungsproblems zu berechnen, die nach einer Kombination sucht, die zwei oder mehr Observables einschließt, die eine Kombination von Observables in einer Vereinigung der ersten Clique (4) und der zweiten Gruppe (5) ist, und die eine Bedingung erfüllt, dass eine simultane Messung der erwarteten Werte für optional zwei in der Kombination eingeschlossene Observables möglich ist;

Erzeugen einer zweiten Clique (6), die eine Kombination von Observables angibt, die in der Lösung des zweiten kombinatorischen Optimierungsproblems angegeben sind; und

Wiederholen der Verarbeitung eines Aktualisierens der in der ersten Clique (4) eingeschlossenen Observables mit den in der zweiten Clique (6) eingeschlossenen Observables, der Verarbeitung des Erzeugens der zweiten Gruppe (5), der Verarbeitung des Veranlassens der Ising-Maschine, die Lösung des zweiten kombinatorischen Optimierungsproblems zu berechnen, und der Verarbeitung des Erzeugens der zweiten Clique (6), bis eine vorbestimmte Endbedingung erfüllt ist, wobei die zuletzt erzeugte zweite Clique die endgültige zweite Clique ist.

**Revendications**

1.  Programme de partitionnement d'observables à bits quantiques multiples, le programme de partitionnement comprenant des instructions qui, lorsqu'elles sont exécutées par un ordinateur, amènent l'ordinateur à exécuter un traitement comprenant la génération d'une seconde clique finale, pour la mesure simultanée par un ordinateur quantique des observables qui y sont contenues, en :

    amenant une machine d'Ising à calculer une solution d'un premier problème d'optimisation combinatoire qui recherche une combinaison qui inclut deux observables ou plus, qui est une combinaison d'observables dans un premier groupe (3) qui inclut au moins deux observables d'une pluralité d'observables à mesurer, et qui satisfait une condition selon laquelle la mesure simultanée des valeurs attendues est possible pour deux observables quelconques incluses dans la combinaison ;
    générant une première clique (4) qui indique une combinaison d'observables indiquée dans la solution du premier problème d'optimisation combinatoire ;
    générant un second groupe (5) qui inclut un nombre prédéterminé d'observables non inclus dans la première clique (4) sur la base du nombre d'observables dans la première clique (4), pour lequel une mesure simultanée des valeurs attendues est possible pour chacune des observables non incluses dans la première clique (4) ;
    amenant la machine d'Ising à calculer une solution d'un second problème d'optimisation combinatoire qui recherche une combinaison qui inclut deux observables ou plus, qui est une combinaison d'observables dans une union de la première clique (4) et du second groupe (5), et qui satisfait une condition selon laquelle la mesure simultanée des valeurs attendues est possible pour deux observables quelconques incluses dans la combinaison ;
    générant une seconde clique (6) qui indique une combinaison d'observables indiquée dans la solution du second problème d'optimisation combinatoire ; et
    répétant, jusqu'à ce qu'une condition finale prédéterminée soit satisfaite, le traitement de mise à jour des observables incluses dans la première clique (4) avec les observables incluses dans la seconde clique (6), le traitement de génération du second groupe (5), le traitement consistant à amener la machine d'Ising à calculer la solution du second problème d'optimisation combinatoire et le traitement de génération de la seconde clique (6), dans lequel la seconde clique générée en dernier est la seconde clique finale.

2.  Programme de partitionnement d'observables à bits quantiques multiples selon la revendication 1, dans lequel,

    lors du processus de génération du second groupe (5), pour chacune des observables non incluses dans la première clique (4), est compté le nombre d'observables commutatives qui indique le nombre d'observables dans la première clique (4) pour lesquelles la mesure simultanée des valeurs attendues est possible, et le second groupe (5) qui inclut un nombre prédéterminé d'observables dans l'ordre décroissant du nombre d'observables commutatives parmi les observables non incluses dans la première clique (4) est généré.

3. Programme de partitionnement d'observables à bits quantiques multiples selon la revendication 2, dans lequel la condition finale prédéterminée inclut une condition selon laquelle le nombre d'observables dont le nombre d'observables commutatives est égal ou supérieur à une valeur prédéterminée parmi les observables non incluses dans la première clique (4) est égal ou inférieur à une valeur obtenue en soustrayant le nombre d'observables incluses dans la première clique (4) du nombre de bits utilisés pour le calcul par la machine d'Ising.

4. Programme de partitionnement d'observables à bits quantiques multiples selon la revendication 1, dans lequel la condition finale prédéterminée inclut une condition selon laquelle le nombre d'exécutions du traitement de génération de la seconde clique (6) a atteint une valeur prédéterminée.

5. Programme de partitionnement d'observables à bits quantiques multiples selon la revendication 1, dans lequel la condition finale prédéterminée inclut une condition selon laquelle le nombre d'observables inclus dans la seconde clique est égal au nombre de bits utilisés pour le calcul par la machine d'Ising.

6. Programme de partitionnement d'observables à bits quantiques multiples selon l'une quelconque des revendications 1 à 5, dans lequel, dans le processus de calcul de la solution du premier problème d'optimisation combinatoire, le premier groupe (3) qui inclut le même nombre d'observables que le nombre de bits utilisés pour le calcul par la machine d'Ising est généré, la machine d'Ising est invitée à rechercher la solution du premier problème d'optimisation combinatoire selon le premier groupe généré (3), et la solution du premier problème d'optimisation combinatoire est obtenue à partir de la machine d'Ising.

7. Programme de partitionnement d'observables à bits quantiques multiples selon la revendication 6, dans lequel,

lors du traitement de génération du second groupe (5), le second groupe (5) qui inclut le même nombre d'observables que la différence entre le nombre de bits utilisables pour le calcul par la machine d'Ising et le nombre d'observables inclus dans la première clique (4) est généré, et dans le processus de calcul de la solution du second problème d'optimisation combinatoire, la machine d'Ising est invitée à rechercher la solution du second problème d'optimisation combinatoire selon le second groupe généré, et la solution du second problème d'optimisation combinatoire est obtenue à partir de la machine d'Ising.

8. Procédé de partitionnement mis en œuvre par ordinateur d'observables à bits quantiques multiples, le procédé de partitionnement mis en œuvre par ordinateur comprenant la génération d'une seconde clique finale, pour la mesure simultanée par un ordinateur quantique des observables qui y sont contenues, en :

amenant une machine d'Ising à calculer une solution d'un premier problème d'optimisation combinatoire qui recherche une combinaison qui inclut deux observables ou plus, qui est une combinaison d'observables dans un premier groupe (3) qui inclut au moins deux observables d'une pluralité d'observables à mesurer, et qui satisfait une condition selon laquelle la mesure simultanée des valeurs attendues est possible pour deux observables quelconques incluses dans la combinaison ;
générant une première clique (4) qui indique une combinaison d'observables indiquée dans la solution du premier problème d'optimisation combinatoire ;
générant un second groupe (5) qui inclut un nombre prédéterminé d'observables non inclus dans la première clique (4) sur la base du nombre d'observables dans la première clique (4), pour lequel une mesure simultanée des valeurs attendues est possible pour chacune des observables non incluses dans la première clique (4) ;
amenant la machine d'Ising à calculer une solution d'un second problème d'optimisation combinatoire qui recherche une combinaison qui inclut deux observables ou plus, qui est une combinaison d'observables dans une union de la première clique (4) et du second groupe (5), et qui satisfait une condition selon laquelle la mesure simultanée des valeurs attendues est possible pour deux observables quelconques incluses dans la combinaison ;
générant une seconde clique (6) qui indique une combinaison d'observables indiquée dans la solution du second problème d'optimisation combinatoire ; et
répétant, jusqu'à ce qu'une condition finale prédéterminée soit satisfaite, le traitement de mise à jour des observables incluses dans la première clique (4) avec les observables incluses dans la seconde clique (6), le traitement de génération du second groupe (5), le traitement consistant à amener la machine d'Ising à calculer la solution du second problème d'optimisation combinatoire et le traitement de génération de la seconde clique (6), dans lequel la seconde clique générée en dernier est la seconde clique finale.

9. Dispositif de traitement d'informations comprenant :
une unité de traitement configurée pour générer une seconde clique finale, pour la mesure simultanée par un ordinateur quantique des observables qui y sont contenues, en :

amenant une machine d'Ising à calculer une solution d'un premier problème d'optimisation combinatoire qui recherche une combinaison qui inclut deux observables ou plus, qui est une combinaison d'observables dans un premier groupe (3) qui inclut au moins deux observables d'une pluralité d'observables à mesurer, et qui satisfait une condition selon laquelle la mesure simultanée des valeurs attendues est possible pour deux observables quelconques incluses dans la combinaison ;
générant une première clique (4) qui indique une combinaison d'observables indiquée dans la solution du premier problème d'optimisation combinatoire ;
générant un second groupe (5) qui inclut un nombre prédéterminé d'observables non inclus dans la première clique (4) sur la base du nombre d'observables dans la première clique (4), pour lequel une mesure simultanée des valeurs attendues est possible pour chacune des observables non incluses dans la première clique (4) ;
amenant la machine d'Ising à calculer une solution d'un second problème d'optimisation combinatoire qui recherche une combinaison qui inclut deux observables ou plus, qui est une combinaison d'observables dans une union de la première clique (4) et du second groupe (5), et qui satisfait une condition selon laquelle la mesure simultanée des valeurs attendues est possible pour deux observables quelconques incluses dans la combinaison ;
générant une seconde clique (6) qui indique une combinaison d'observables indiquée dans la solution du second problème d'optimisation combinatoire ; et
répétant, jusqu'à ce qu'une condition finale prédéterminée soit satisfaite, le traitement de mise à jour des observables incluses dans la première clique (4) avec les observables incluses dans la seconde clique (6), le traitement de génération du second groupe (5), le traitement consistant à amener la machine d'Ising à calculer la solution du second problème d'optimisation combinatoire et le traitement de génération de la seconde clique (6), dans lequel la seconde clique générée en dernier est la seconde clique finale.

# FIG. 1

# FIG. 2

# FIG. 3

# FIG. 4

MEASURE $I_0Y_1X_2$, $Z_0Z_1Z_2$, AND $X_0I_1X_2$

# FIG. 5

| | $I$ | $X$ | $Y$ | $Z$ |
|---|---|---|---|---|
| $I$ | + | + | + | + |
| $X$ | + | + | − | − |
| $Y$ | + | − | + | − |
| $Z$ | + | − | − | + |

35

+ : COMMUTATIVE
− : ANTICOMMUTATIVE

COMPARE $I_0Y_1X_2$ AND $Z_0Z_1Z_2$

$$I_0 Z_0 = Z_0 I_0 \qquad Y_1 Z_1 = -Z_1 Y_1 \qquad X_2 Z_2 = -Z_2 X_2$$

$$(I_0 Y_1 X_2)(Z_0 Z_1 Z_2) = (Z_0 Z_1 Z_2)(I_0 Y_1 X_2)$$

COMMUTATIVE

# FIG. 6

Clique #1

Clique #2

# FIG. 7

71

PARTITIONING

72a
Clique 72b
72c
Clique
Clique
Clique

73c 73d 73e
Clique
Clique
Clique
Clique
Clique 73f
73a
Clique
Clique
73b

THE NUMBER OF
CLIQUES: SMALL

THE NUMBER OF
CLIQUES: LARGE

# FIG. 8

CLASSICAL COMPUTER — 100

STORAGE UNIT — 150

CLIQUE GENERATION PROCESSING END CONDITION — 151

COMMUTATION RELATION DETERMINATION UNIT — 110

PARTITIONING UNIT — 120

QUANTUM CIRCUIT GENERATION UNIT — 130

EXPECTED VALUE ACQUISITION UNIT — 140

ISING MACHINE — 200

GATE-TYPE QUANTUM COMPUTER — 300

# FIG. 9

LIST ELEMENTS OF OBSERVABLE GROUP TO BE MEASURED

40

ZZII IIIZ IIZI IZII ZIII YYXX XYYX YXXY XXYY IIZZ IZIZ ZIIZ IZZI ZIZI

DETERMINE COMMUTATION
RELATIONS AMONG ELEMENTS

40

ZZII IIIZ IIZI IZII ZIII YYXX XYYX YXXY XXYY IIZZ IZIZ ZIIZ IZZI ZIZI

# FIG. 10

ALLOCATE VARIABLE

$x_{14}$     $x_1$   40

$x_{13}$   ZZII    IIIZ

ZIZI             IIZI   $x_2$

$x_{12}$

IZZI               IZII   $x_3$

$x_{11}$   ZIIZ            ZIII $x_4$

IZIZ            YYXX

$x_{10}$               $x_5$

IIZZ            XYYX

XXYY   YXXY   $x_6$

$x_9$        $x_7$

$x_8$

ESTABLISH EXPRESSION:     81

$$f(\{x_i\}) = -\sum_i x_i + \sum_{i,j} c_{ij} x_i x_j$$

$\{x_i\}$: BINARY VARIABLE
$x_i=1$: TO BECOME ELEMENT OF Partition
$x_i=0$: NOT TO BECOME ELEMENT OF Partition

$\{c_{ij}\}$: NON-NEGATIVE CONSTANT
$c_{ij}=0$: $\chi_i$ AND $\chi_j$ ARE IN COMMUTATION RELATION
$c_{ij}=m$: $\chi_i$ AND $\chi_j$ ARE IN ANTICOMMUTATION RELATION

200

ISING MACHINE

CALCULATE $\{\chi_i\}$ THAT MINIMIZES $f(\{\chi_i\})$

# FIG. 11

# FIG. 12

# FIG. 13

# FIG. 14

# FIG. 15

THE NUMBER OF
BITS $n_{bit}$ = 16

$O_1$

[STEP S1]

(FIRST-STAGE) CLIQUE
GENERATION FROM SUBGROUP $O_1'$

[STEP S2]

$C_1'$
($c_1'$=6)

$O_1'$

COUNT THE NUMBER OF
COMMUTATIVE ELEMENTS IN $C_1'$ FOR
ELEMENTS NOT INCLUDED IN $C_1'$

q

THE NUMBER OF
COMMUTATIVE
ELEMENTS m(q)

$C_1'$

[STEP S3]

# FIG. 16

[STEP S4]

[STEP S5]

COUNT THE NUMBER OF ELEMENTS $c_1$ IN $C_1'$ ($c_1 = 6$)
COUNT THE NUMBER OF ELEMENTS $q$ $n_{m(q)=c}$
SATISFYING $m(q) = c_1$ ($n_{m(q)=c} = 14$)

GENERATE SUBSET $D_1'$ INCLUDING
$n_{bit} - c_1$ ELEMENTS FROM ONE
HAVING LARGEST $m(q)$

$D_1'$

[STEP S6]

$C_1'$

$D_1'$

# FIG. 17

PERFORM PARTITIONING ON
UNION OF $C_1'$ AND $D_1'$

[STEP S7]

$C_1'$

$D_1'$

(SECOND-STAGE)
GENERATION OF
NEW CLIQUE $C_1$

$C_1$

[STEP S8]

DETERMINE CLIQUE GENERATION
PROCESSING END CONDITION

[STEP S9]

- $r < r_0$
- $n_{m(q)=c} > n_{bit} - C_1$
- THE NUMBER OF ELEMENTS IN $C_1 < n_{bit}$

END CONDITIONS
ARE NOT SATISFIED

# FIG. 18

150

151

FIRST END CONDITION: $r = r_0$
SECOND END CONDITION: THE NUMBER OF ELEMENTS q $n_{m(q)=c}$
  SATISFYING $m(q) = c_i$ IS EQUAL TO OR LESS THAN $n_{bit} - c_i$
THIRD END CONDITION: THE NUMBER OF ELEMENTS IN $C_i$ IS $n_{bit}$

# FIG. 19

$C_1' \leftarrow C_1$

[STEP S10]

[STEP S11]

[STEP S12]  COUNT THE NUMBER OF ELEMENTS $c_1$ IN $C_1'$ ($c_1$ = 9)
COUNT THE NUMBER OF ELEMENTS $q$ $n_{m(q)=c}$ SATISFYING $m(q)$ = $c_1$ ($n_{m(q)=c}$ = 3)

# FIG. 20

GENERATE SUBSET $D_1'$ INCLUDING $n_{bit} - c_1$
ELEMENTS FROM ONE HAVING LARGEST $m(q)$

[STEP S13]

$D_1'$

PERFORM PARTITIONING ON
UNION OF $C_1'$ AND $D_1'$

$C_1'$

[STEP S14]

$D_1'$

GENERATE CLIQUE

$C_1$

[STEP S15]

# FIG. 21

DETERMINE CLIQUE GENERATION PROCESSING END CONDITION

[STEP S16]

- $r < r_0$
- $n_{m(q)=c} \leqq n_{bit} - c_1$
- THE NUMBER OF ELEMENTS IN $C_1 < n_{bit}$

$\Bigg\}$ SECOND END CONDITION IS SATISFIED

$O_1$

$C_1$

[STEP S17]

CONFIRM CLIQUE

$O_2$

TO NEXT CLIQUE GENERATION PROCESSING

# FIG. 22

```
            ┌──────────────┐
            │    START     │
            └──────────────┘
                   │
                   ▼
┌─────────────────────────────────────────┐
│ LIST ELEMENTS OF OBSERVABLE GROUP (O)    │──── S101
└─────────────────────────────────────────┘
                   │
                   ▼
┌─────────────────────────────────────────┐
│ DETERMINE COMMUTATION RELATIONS          │──── S102
└─────────────────────────────────────────┘
                   │
                   ▼
┌─┬───────────────────────────────────────┬─┐
│ │          PARTITIONING                  │ │──── S103
└─┴───────────────────────────────────────┴─┘
                   │
                   ▼
┌─────────────────────────────────────────┐
│ SELECT OBSERVABLES FROM SAME CLIQUE      │──── S104
└─────────────────────────────────────────┘
                   │
                   ▼
┌─────────────────────────────────────────┐
│ GENERATE QUANTUM CIRCUIT FOR             │──── S105
│ SIMULTANEOUS MEASUREMENT                 │
└─────────────────────────────────────────┘
                   │
                   ▼
┌─────────────────────────────────────────┐
│ INSTRUCT GATE-TYPE QUANTUM COMPUTER TO   │──── S106
│ PERFORM CALCULATION                      │
└─────────────────────────────────────────┘
                   │
                   ▼
┌─────────────────────────────────────────┐
│ ACQUIRE EXPECTED VALUES OF OBSERVABLES   │──── S107
└─────────────────────────────────────────┘
                   │
                   ▼
             S108 ◇
      ◇ IS THERE UNSELECTED OBSERVABLE? ◇ ──YES──┐
             ◇                              (loop to S104)
                   │ NO
                   ▼
┌─────────────────────────────────────────┐
│ OUTPUT SOLUTION                          │──── S109
└─────────────────────────────────────────┘
                   │
                   ▼
            ┌──────────────┐
            │     END      │
            └──────────────┘
```

# FIG. 23

START

SET k = 1 AND SUBGROUP $O_{k=1}$ = OBSERVABLE GROUP O — S121

S122

THE NUMBER OF ELEMENTS $M_k$ OF $O_k$ > THE NUMBER OF BITS $n_{bit}$ OF ISING MACHINE?

NO → S123

CLIQUE GENERATION (GENERATE CLIQUE $C_k$ FROM SUBGROUP $O_k$)

S124

YES

GENERATE SUBGROUP $O_k'$ OBTAINED BY EXTRACTING $n_{bit}$ ELEMENTS AMONG $M_k$ ELEMENTS

S125

CLIQUE GENERATION (GENERATE CLIQUE $C_k'$ FROM SUBGROUP $O_k'$)

S126

r=1

COUNT THE NUMBER OF ELEMENTS $m(q_i)$ OF $C_k'$ THAT ARE MUTUALLY COMMUTATIVE FOR OBSERVABLE $q_i$ THAT BELONGS TO $O_k'$ AND DOES NOT BELONG TO $C_k'$ — S127

GENERATE SUBGROUP $D_k'$ OBTAINED BY EXTRACTING $n_{bit} - C_k'$ OBSERVABLES IN DESCENDING ORDER OF $m(q_i)$ AMONG $\{q_i\}$ — S128

GENERATE SUBGROUP $O_k''$ OF UNION OF $C_k'$ AND $D_k'$ — S129

CLIQUE GENERATION (GENERATE CLIQUE $C_k$ FROM SUBGROUP $O_k''$) — S130

S131

IS END CONDITION SATISFIED?

NO → S132

$r \leftarrow r+1, C_k' \leftarrow C_k$

YES

GENERATE SUBGROUP $O_{k+1}$ OBTAINED BY REMOVING ELEMENTS OF $C_k$ FROM $O_k$ — S133

S134

IS $O_{k+1}$ EMPTY SET?

YES → END

NO

S135

$k \leftarrow k+1$

# FIG. 24

START

CREATE ISING MODEL OF SUBGROUP — S201

SET THE NUMBER OF OBSERVABLES TO L
AND RESPECTIVE OBSERVABLES TO
$\{P_1, P_2, ..., P_L\}$ — S202

GENERATE L × L ZERO MATRIX E — S203

LOOP FOR n1 SATISFYING $1 \leq n1 \leq L$ — S204

LOOP FOR n2 SATISFYING $n1 \leq n2 \leq L$ — S205

IS $P_{n1}P_{n2} = P_{n2}P_{n1}$ SATISFIED? — S206    YES

NO

$E_{n1,n2}=1$ — S207

END FOR ALL n2 SATISFYING $n1 \leq n2 \leq L$ — S208

END FOR ALL n1 SATISFYING $1 \leq n1 \leq L$ — S209

A

# FIG. 25

A

S211
DEFINE BINARY VARIABLE GROUP
$X = \{X_1, X_2, ..., X_N\}$

S212
$$f(x) = -\sum_{i \in x} x_i + m \sum_{i<j, i \in x, jx} E_{i,j} x_i x_j$$

S213
INSTRUCT ISING MACHINE TO SEARCH FOR
GROUND STATE OF ISING MODEL

S214
ACQUIRE $X$ THAT MINIMIZES $f(X)$

S215
$$p = \{P_i | x_i \in x \cap x_i = 1\}$$

END

# FIG. 26

THE NUMBER OF OBSERVABLES
PER CONFIRMED CLIQUE

93

ONLY FIRST END
CONDITION
($r_0=3$)

WITH SECOND AND THIRD
END CONDITIONS ($r_0=10$)

$2 \times 10^2$

$10^2$

$6 \times 10^1$

$4 \times 10^1$

$3 \times 10^1$

ONLY FIRST END
CONDITION
($r_0=2$)

ONLY FIRST END
CONDITION
($r_0=1$)

$10^2$                    $10^3$                    $10^4$

THE NUMBER OF BITS ($n_{bit}$) OF ISING MACHINE

# FIG. 27

FIG. 28

# FIG. 29

ONLY FIRST END CONDITION ($r_0$=3)

THE NUMBER OF OBSERVABLES PER CONFIRMED CLIQUE

$n_{bit}$=512

P7

WITH SECOND AND THIRD END CONDITIONS($r_0$=10)

P8

96

ONLY FIRST END CONDITION ($r_0$=2)

P6

TARGET CHARACTERISTIC

ONLY FIRST END CONDITION ($r_0$=1)

P5

THE NUMBER OF TIMES OF CLIQUE GENERATION PROCESSING PER CONFIRMED CLIQUE

# FIG. 30

THE NUMBER OF
TIMES OF CLIQUE
GENERATION
PROCESSING

$n_{bit}=512$

CLIQUE NUMBER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021005282 A
- JP 2021131695 A
- US 20200234172
- US 20200272686

**Non-patent literature cited in the description**

- **VLADYSLAV VERTELETSKYI et al.** Measurement Optimization in the Variational Quantum Eigensolver Using a Minimum Clique Cover. *ARXIV.ORG*, 08 July 2019